# EUROPEAN PATENT APPLICATION

(11) **EP 4 560 730 A1**
(43) Date of publication of application: **28.05.2025**
(21) Application number: 23882805.7
(22) Date of filing: 03.05.2023
(51) Int. Cl.: H01M 4/505, H01M 4/525, H01M 4/36, H01M 10/052, H01M 4/02

(54) **LITHIUM SECONDARY BATTERY**

(30) Priority: 26.10.2022 KR 20220139450
(71) Applicant: ECOPRO BM CO., LTD., Cheongju-si, Chungcheongbuk-do 28116 (KR)
(72) Inventor: LIM, Ra Na, Cheongju-si, Chungcheongbuk-do 28116 (KR); JUNG, Hyun Su, Cheongju-si, Chungcheongbuk-do 28116 (KR); LIM, Kyung Min, Cheongju-si, Chungcheongbuk-do 28116 (KR)
(74) Representative: BCKIP Part mbB
(86) International application number: PCT/KR2023/006018
(87) International publication number: WO 2024/090695

(57) **Abstract**

The present invention relates to a lithium secondary battery, and more particularly, to a lithium secondary battery which has an improved capacity and lifetime maintenance rate by controlling a voltage range during formation or operation of the lithium secondary battery. **In** addition, the present invention relates to a lithium secondary battery in which the degradation of the electrochemical properties of a lithium secondary battery, including rate capability, caused by an excess of lithium and manganese in the lithium manganese-based oxide used as a positive electrode active material, is prevented, and particularly, the lifetime deterioration is prevented by inhibiting or mitigating the dissolution of a transition metal from the lithium manganese-based oxide.

## Description

### [Technical Field]

The present invention relates to a lithium secondary battery, and more particularly, to a lithium secondary battery which has improved capacity and lifetime maintenance rate by controlling a voltage range during formation or operation of the lithium secondary battery. In addition, the present invention relates to a lithium secondary battery in which the degradation of the electrochemical properties of a lithium secondary battery, including rate capability, caused by an excess of lithium and manganese in the lithium manganese-based oxide used as a positive electrode active material, is prevented, and particularly, the lifetime deterioration is prevented by inhibiting or mitigating the dissolution of a transition metal from the lithium manganese-based oxide.

### [Background Art]

Batteries store electrical power by using materials facilitating an electrochemical reaction at a positive electrode and a negative electrode. As a representative example of such batteries, there is a lithium secondary battery storing electrical energy due to a difference in chemical potential when lithium ions are intercalated/deintercalated into/from a positive electrode and a negative electrode.

The lithium secondary battery uses materials enabling reversible intercalation/deintercalation of lithium ions as positive electrode and negative electrode active materials, and is manufactured by charging an organic electrolyte or a polymer electrolyte between the positive electrode and the negative electrode.

A representative material used as a positive electrode active material of a lithium secondary battery is a lithium composite oxide. The lithium composite oxide may be LiCoO₂, LiMn₂O₄, LiNiO₂, LiMnO₂, or an oxide in which Ni, Co, Mn or Al is complexed as disclosed in Korean Unexamined Patent Application Publication No. 10-2015-0069334 (June 23, 2015).

Among the positive electrode active materials, LiCoO₂ is most widely used due to excellent lifetime characteristics and charge/discharge efficiency, but it is expensive due to cobalt being a limited resource, which is used as a raw material, and thus has a disadvantage of limited price competitiveness.

Lithium manganese oxides such as LiMnO₂ and LiMn₂O₄ have advantages of excellent thermal safety and low costs, but also have problems of small capacity and poor high-temperature characteristics. In addition, while a LiNiO₂-based positive electrode active material exhibits a battery characteristic such as a high discharge capacity, due to cation mixing between Li and a transition metal, it is difficult to synthesize the LiNiO₂-based positive electrode active material, thereby causing a big problem in rate characteristics.

In addition, depending on the intensification of such a cation mixing, a large amount of Li by-products is generated. Since most of the Li by-products include LiOH and Li₂CO₃, they may cause gelation in preparation of a positive electrode paste, or cause gas generation according to repeated charging/discharging after the manufacture of an electrode. In addition, residual Li₂CO₃ in the Li by-product increases cell swelling to act as the cause of degrading lifetime characteristics.

Various candidate materials for compensating for these shortcomings of conventional positive electrode active materials are being suggested

In one example, there is on-going research to use an overlithiated lithium manganese-based oxide in which an excess of Mn among transition metals is included and a lithium content is higher than the sum of the contents of the transition metals as a positive electrode active material for a lithium secondary battery. Such an overlithiated lithium manganese-based oxide is also referred to as an overlithiated layered oxide (OLO).

Although the OLO has an advantage in that it can theoretically exhibit high capacity under a high voltage operating environment, in fact, due to an excessive amount of Mn contained in the oxide, electric conductivity is relatively low, and thus the rate characteristic (rate capability) of a lithium secondary battery using OLO is low. As such, when the rate characteristic (rate capability) is low, there is a problem in which charge/discharge capacity and lifetime efficiency (capacity retention) are degraded during the cycling of a lithium secondary battery.

In addition, since the OLO has different formation and operation conditions from a ternary lithium composite oxide having a commercialized nickel-cobalt-manganese (NCM) or nickel-cobalt-aluminum (NCA) composition, it is necessary to develop operation conditions under which a lithium secondary battery using the OLO can exhibit electrochemical properties at the commercial level along with the proposal of a novel OLO.

### [Disclosure]

### [Technical Problem]

In the lithium secondary battery market, the growth of lithium secondary batteries for electric vehicles is driving the market, and accordingly, the demand for positive electrode active materials used in lithium secondary batteries is also continuously increasing.

For example, conventionally, to ensure stability, lithium secondary batteries using lithium iron phosphate (LFP) have mainly been used, but recently, the use of a nickel-based lithium composite oxide having a larger energy capacity per weight than LFP tends to be increasing.

In addition, recently, nickel-based lithium composite oxides mainly used as positive electrode active materials for high-capacity lithium secondary batteries essentially use ternary metal elements such as nickel, cobalt and manganese or nickel, cobalt and aluminum. However, since cobalt is not only unstable in supply, but also excessively expensive compared to other raw materials, a positive electrode active material with a new composition, which can reduce a cobalt content or exclude cobalt, is needed.

Considering these circumstances, an overlithiated lithium manganese-based oxide can meet the above-mentioned expectations of the market, but still has limitations in terms of electrochemical properties or stability to replace a commercially-available positive electrode active material such as a ternary lithium composite oxide with a nickel-cobalt-manganese (NCM) or nickel-cobalt-aluminum (NCA) composition.

For example, the present inventors confirmed that, as a lithium manganese-based oxide is repeatedly charged/discharged, the possibility of dissolving a transition metal from a particle surface is higher than that of a ternary lithium composite oxide. Particularly, Mn included in excess in the lithium manganese-based oxide is highly likely to be dissolved from the particle surface.

When a transition metal is dissolved from the lithium manganese-based oxide, the dissolved transition metal may react with an electrolyte on the surface of the lithium manganese-based oxide to form impurities. The impurities not only enhance the surface resistance of the lithium manganese-based oxide, but also become a cause of degrading the intercalation/deintercalation efficiency of lithium ions through the lithium manganese-based oxide.

In addition, the transition metal dissolved from the lithium manganese-based oxide or the impurities formed by the reaction between the dissolved transition metal and an electrolyte may migrate to a negative electrode using the electrolyte as a medium, and may be deposited on the surface of the negative electrode.

For example, side reactions with the electrolyte may occur on the surface of the lithium manganese-based oxide, or Mn²⁺ included in excess in the lithium manganese-based oxide may be dissolved into the electrolyte due to the structural change (the change in crystal structure) of the lithium manganese-based oxide. The Mn²⁺ dissolved into the electrolyte may migrate to the surface of the negative electrode using the electrolyte as a medium during formation or charging/discharging to have reactions with various materials (electrons, an electrolyte, an electrode, by-products, etc.) present in the battery, and as a result, impurities including Mn²⁺, Mn metal or Mn-containing compounds (e.g., MnCO₃, MnO, MnF₂, etc.) are present on the surface of the negative electrode.

The transition metal or impurities deposited on the surface of the negative electrode may rapidly increase the resistance of the negative electrode, and such an abnormal resistance phenomenon is a typical cause of accelerating the lifetime deterioration of a lithium secondary battery.

Particularly, since a lithium secondary battery using the lithium manganese-based oxide as a positive electrode active material has a higher operating voltage than a lithium secondary battery using another commercially-available ternary lithium composite oxide as a positive electrode active material, it is vulnerable to the above-described problem.

However, until now, there is no technology for resolving the dissolution of a transition metal from the overlithiated lithium manganese-based oxide and a problem caused thereby.

As described above, compared with other types of commercialized positive electrode active materials, the conventional overlithiated lithium manganese-based oxides have disadvantages in terms of electrochemical properties and/or stability. However, the present inventors confirmed that, when a barrier layer that can control the bulk composition of the lithium manganese-based oxide, and at the same time, inhibit or mitigate the dissolution of a transition metal from the surface of the lithium manganese-based oxide is included, the overlithiated lithium manganese-based oxide may also exhibit commercially available levels of electrochemical properties and stability.

Particularly, it was confirmed by the present inventors that the lithium manganese-based oxide is formed as a core-shell particle in which at least one transition metal constituting the lithium manganese-based oxide exhibits a concentration gradient from the core to the shell, and that the dissolution of a transition metal from the lithium manganese-based oxide can be inhibited or mitigated by making the content of a transition metal having a relatively low possibility of dissolution higher than that of other transition metals in a region corresponding to the shell.

In addition, it was confirmed by the present inventors that, when the surface of such a core-shell particle, i.e., the surface of the shell, is covered with a barrier layer capable of inhibiting or mitigating the dissolution of a transition metal from the core-shell particle, the dissolution of the transition metal from the lithium manganese-based oxide can be further suppressed or mitigated.

Accordingly, the present invention is directed to providing a lithium secondar battery using a positive electrode active material including an overlithiated lithium manganese-based oxide, which is capable of inhibiting or mitigating the dissolution of a transition metal from the lithium manganese-based oxide by controlling the bulk composition of the lithium manganese-based oxide and simultaneously forming a barrier layer on the surface of the lithium manganese-based oxide.

The present invention is also directed to providing a positive electrode active material, which includes a lithium manganese-based oxide formed as a core-shell particle in which at least one transition metal constituting the lithium manganese-based oxide exhibits a concentration gradient from the core to the shell and is able to inhibit or mitigate the dissolution of a transition metal from the lithium manganese-based oxide by making the content of a transition metal having a relatively low possibility of dissolution higher than that of other transition metals in a region corresponding to the shell and simultaneously improve the charge transfer and/or diffusion (i.e., surface kinetics) on the surface of the lithium manganese-based oxide.

The present invention is also directed to providing a lithium secondary battery, which uses the lithium manganese-based oxide defined herein as a positive electrode active material, and is capable of preventing the degradation in rate capability caused by an excess of lithium and manganese in a conventional OLO, and realizing high stability by reducing side reactions between the positive electrode active material and an electrolyte during high-voltage operation.

Particularly, the present invention is directed to providing operating conditions for a lithium secondary battery using the lithium manganese-based oxide defined herein as a positive electrode active material to exhibit electrochemical properties at a commercial level.

### [Technical Solution]

To solve the above-described technical problems, one aspect of the present invention provides a positive electrode active material including a lithium manganese-based oxide in which a phase belonging to a C2/m space group and a phase belonging to an R3-m space group are dissolved or complexed.

The lithium secondary battery may be subjected to at least one formation cycle in a formation voltage range in which the upper voltage limit (fv1) is 4.4V or more based on a positive electrode potential for activating a positive electrode active material including an overlithiated lithium manganese-based oxide.

In addition, to exhibit the high capacity characteristics of the lithium manganese-based oxide, after formation, the lithium secondary battery may be operated in an operating voltage range in which the upper voltage limit (ov1) is greater than 4.3V and 5.0V or less, greater than 4.3V and 4.8V or less, or greater than 4.3V and 4.6V or less.

To increase the charge/discharge efficiency of the lithium secondary battery and improve the capacity and lifetime-related properties of the lithium secondary battery, after formation, the lithium secondary battery may be operated in an operating voltage range in which the lower voltage limit (ov2) is 2.0V or more, preferably, 2.0V or more and less than 3.0V.

In addition, the operating voltage range during operation of the lithium secondary battery is preferably set so that the difference (ov1-ov2) between the upper voltage limit (ov1) and the lower voltage limit (ov2) of the operating voltage range is greater than 1.6V and less than 2.6V.

The difference (ov1-ov2) between the upper voltage limit (ov1) and the lower voltage limit (ov2) of the operating voltage range being 1.6V or less means that the upper voltage limit (ov1) of the operating voltage range is excessively low or the lower voltage limit (ov2) is excessively high. When the upper voltage limit (ov1) of the operating voltage range is excessively low or the lower voltage limit (ov2) is excessively high, there is a concern that the discharge capacity of the lithium secondary battery may be excessively reduced.

On the other hand, the difference (ov1-ov2) between the upper voltage limit (ov1) and the lower voltage limit (ov2) of the operating voltage range being 2.6V or more means that the upper voltage limit (ov1) of the operating voltage range is excessively high or the lower voltage limit (ov2) is excessively low. In this case, as the difference between the upper voltage limit (ov1) and the lower voltage limit (ov2) of the operating voltage range increases, the charge/discharge efficiency of the lithium secondary battery may be reduced.

Meanwhile, when the upper voltage limit (ov1) of the operating voltage range is excessively high, the capacity retention rate and average discharge voltage retention rate of the lithium secondary battery may be rapidly lowered. **In** addition, when the lower voltage limit (ov2) of the operating voltage is excessively low, the average discharge voltage and average discharge voltage retention rate of the lithium secondary battery may be reduced. The lower voltage limit (ov2) of the operating voltage range may also affect the stability of the lithium secondary battery, and the stability of the lithium secondary battery can be confirmed by indicators related to gas generation such as a volume change rate.

Meanwhile, the positive electrode active material used herein includes a lithium manganese-based oxide in which a phase belonging to a C2/m space group and a phase belonging to an R3-m space group are dissolved or complexed.

Generally, in a commercially-available ternary lithium composite oxide with a nickel-cobalt-manganese (NCM) or nickel-cobalt-aluminum (NCA) composition, the phase belonging to the R3-m space group is present as a single phase, but in the overlithiated lithium manganese-based oxide defined herein, the phase belonging to the C2/m space group and the phase belonging to the R3-m space group are dissolved or complexed.

Here, the lithium manganese-based oxide is provided as a core-shell particle in which at least one transition metal constituting the lithium manganese-based oxide exhibits a concentration gradient from the core to the shell.

Here, the possibility of a transition metal being dissolved from the lithium manganese-based oxide may be reduced by forming the lithium manganese-based oxide as a core-shell particle in which at least one transition metal constituting the lithium manganese-based oxide exhibits a concentration gradient from the core to the shell and making the content of a transition metal having a relatively low possibility of dissolution higher than that of other transition metals in the region corresponding to the shell.

According to one embodiment, the lithium manganese-based oxide in the positive electrode active material may be present in at least one form selected from a single primary particle and a secondary particle in which a plurality of primary particles agglomerate.

For example, the positive electrode active material may include the lithium manganese-based oxide as a secondary particle in which a plurality of primary particles agglomerate.

Here, the secondary particle may be a core-shell particle in which at least one transition metal exhibits a concentration gradient from the central portion to the surface portion of the secondary particle.

Here, a barrier layer may be present to cover at least a part of the surface of the secondary particle to inhibit or mitigate the dissolution of a transition metal from the secondary particle.

In addition, a grain boundary is defined between adjacent primary particles in the secondary particle. The barrier layer may be present in a state of diffusing from the surface portion of the secondary particle to the central portion thereof along the grain boundary.

According to another embodiment, the primary particle may be a core-shell particle in which at least one transition metal exhibits a concentration gradient from the central portion of the primary particle to the surface portion thereof.

Here, the barrier layer may be present to cover at least a part of the surface of the primary particle to inhibit or mitigate the dissolution of a transition metal from the primary particle.

According to still another embodiment, the primary particle may include at least one crystallite, and the crystallite may have at least one transition metal exhibiting a concentration gradient from the central portion of the crystallite to the central portion thereof.

Here, the barrier layer may cover each crystallite present in the primary particle, but the purpose of inhibiting or mitigating the dissolution of a transition metal may be sufficiently achieved by covering the surface of the primary particle.

According to one embodiment, the lithium manganese-based oxide may be represented by Chemical Formula 1 below.

[Chemical Formula 1] Li(LiₐM1ₓM2_{y})O_{2-b}X_{b}

wherein,
M1 is at least one selected from Ni and Mn,
M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, and Nd, and M2 does not overlap with M1,
X is a halogen capable of substituting at least some of the oxygen present in the lithium manganese-based oxide,
0<a≤0.7, 0≤b≤0.1, 0<x≤1, 0≤y<1, and 0<x+y≤1.

According to another embodiment, the lithium manganese-based oxide may be represented by Chemical Formula 1-1 below.

[Chemical Formula 1-1] rLi₂MnO_{3-b"}X'_{b"} ·(1-r)Li_{a'}M1_{x'}M2_{y'}Q_{2-b'}X_{b'}

wherein,
M1 is at least one selected from Ni and Mn,
M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, and Nd, and M2 does not overlap with M1,
X and X' are halogens capable of substituting at least some of the oxygens present in the lithium manganese-based oxide,
0<r≤0.7, 0<a'≤1, 0≤b'≤0.1, 0≤b"≤0.1, 0<x'≤1, 0≤y'<1, and 0<x'+y'≤1.

### [Advantageous Effects]

According to the present invention, compared with a commercially-available ternary lithium composite oxide with a nickel-cobalt-manganese (NCM) or nickel-cobalt-aluminum (NCA) composition, it is possible to improve the limitations of the conventional overlithiated lithium manganese-based oxides, which have various disadvantages in terms of electrochemical properties and/or stability.

Specifically, according to the present invention, the lithium manganese-based oxide can be formed as a core-shell particle in which at least one transition metal constituting the lithium manganese-based oxide exhibits a concentration gradient from the core to the shell, and by making the content of a transition metal having a relatively low possibility of dissolution higher than that of other transition metals in a region corresponding to the shell, the dissolution of the transition metal from the lithium manganese-based oxide can be inhibited or mitigated.

In addition, when the surface of such a core-shell particle, i.e., the surface of the shell, is covered with a barrier layer capable of inhibiting or mitigating the dissolution of a transition metal from the core-shell particle, the dissolution of the transition metal from the lithium manganese-based oxide can be further suppressed or mitigated.

As the dissolution of a transition metal from the lithium manganese-based oxide is inhibited or mitigated, impurity formation due to the reaction between transition metals dissolved on the surface of the lithium manganese-based oxide and an electrolyte can be prevented.

The transition metal dissolved from the lithium manganese-based oxide and/or the impurities formed by the reaction between the dissolved transition metal and the electrolyte can migrate to a negative electrode using the electrolyte as a medium, and the impurities can be deposited on the surface of the negative electrode to rapidly increase the resistance of the negative electrode. Accordingly, as described in the present invention, it is necessary to limit the unintended movement of a transition metal in a lithium secondary battery.

In other words, according to the present invention, by preventing the dissolution of a transition metal from the lithium manganese-based oxide, the lifetime deterioration of the lithium secondary battery due to the deposition of the impurities on a positive electrode and/or a negative electrode by the transition metal dissolved from the lithium manganese-based oxide can be prevented from being accelerated.

In addition, according to the present invention, by forming the lithium manganese-based oxide as a core-shell particle in which at least one transition metal constituting the lithium manganese-based oxide exhibits a concentration gradient, the charge-transfer and/or diffusion (i.e., surface kinetics) of lithium ions on the surface of the lithium manganese-based oxide can be improved.

As such, when a positive electrode including the positive electrode active material defined herein is used, it is possible to prevent the degradation in rate capability caused by excess lithium and manganese in conventional OLOs, and particularly, realize high stability by reducing side reactions between the positive electrode active material and an electrolyte even during high-voltage operation.

In addition, according to the operating conditions of the lithium secondary battery disclosed herein, compared to a commercialized ternary lithium composite oxide having a NCM or NCA composition, the lithium secondary battery using an overlithiated lithium manganese-based oxide known to be disadvantageous in terms of electrochemical properties and/or stability as a positive electrode active material can exhibit electrochemical properties at a commercial level.

Particularly, when the lithium secondary battery using the lithium manganese-based oxide defined herein is charged/discharged under predetermined operating conditions, it is possible to stably exhibit the capacity and lifetime-related characteristics.

In addition to the above effects, specific effects of the present invention will be described together while explaining specific details for carrying out the present invention.

### [Modes of the Invention]

To better understand the present invention, certain terms are defined herein for convenience. Unless defined otherwise herein, scientific and technical terms used herein will have meanings commonly understood by those of ordinary skill in the art. In addition, unless specifically indicated otherwise, terms in a singular form also include plural forms, and terms in a plural form should be understood to include singular forms as well.

Hereinafter, a positive electrode active material used in a lithium secondary battery and the lithium secondary battery according to some embodiments of the present invention will be described in further detail.

### Positive electrode active material

According to one aspect of the present invention, a positive electrode active material including a lithium manganese-based oxide in which a phase belonging to a C2/m space group and a phase belonging to an R3-m space group are dissolved or complexed is provided.

The lithium manganese-based oxide includes at least lithium, nickel, and manganese. Here, since the lithium content in the lithium manganese-based oxide is larger than the sum of the contents of other transition metals (generally, when the molar ratio (Li/metal molar ratio) of lithium to all metal elements in the lithium manganese-based oxide is greater than 1), it is also referred to as an overlithiated layered oxide (OLO).

Generally, considering that the content of manganese among all metal elements except lithium is 20 mol% or less in a commercially-available ternary lithium composite oxide with a nickel-cobalt-manganese (NCM) or nickel-cobalt-aluminum (NCA) composition, the lithium manganese-based oxide has a relatively high proportion of manganese (e.g., 50 mol% or more, and preferably, 55 to 75 mol%) among all metal elements compared to the commercially-available ternary lithium composite oxide.

In addition, considering that the content of nickel among all metal elements except lithium is 60 mol% or more (in the case of a high-Ni type, 80 mol% or more) in a commercially-available ternary lithium composite oxide with a nickel-cobalt-manganese (NCM) or nickel-cobalt-aluminum (NCA) composition, the lithium manganese-based oxide has a relatively low proportion (e.g., less than 50 mol%, and preferably, 25 to 45 mol%) of nickel among all metal elements compared to the commercially-available ternary lithium composite oxide.

The Li/metal molar ratio measured from the lithium manganese-based oxide defined herein is higher than that of a ternary lithium composite oxide such as nickel-cobalt-manganese (NCM) or nickel-cobalt-aluminum (NCA). For example, the Li/metal molar ratio of a ternary lithium composite oxide such as nickel-cobalt-manganese (NCM) or nickel-cobalt-aluminum (NCA) has a value close to almost 1. On the other hand, the Li/metal molar ratio of the lithium manganese-based oxide defined herein is greater than 1, and preferably 1.1 to 1.6.

Despite the above-described difference in composition, the lithium manganese-based oxide can also serve as a composite metal oxide enabling intercalation/deintercalation of lithium ions.

The lithium manganese-based oxide included in the positive electrode active material defined herein may be present as particles including at least one primary particle.

When the lithium manganese-based oxide is present as a single primary particle, the lithium manganese-based oxide may be referred to as a single particle. On the other hand, when the lithium manganese-based oxide is present as an agglomerate in which a plurality of primary particles agglomerate, the lithium manganese-based oxide may be referred to as a secondary particle.

The positive electrode active material may include at least one selected from the lithium manganese-based oxide present as a single particle and the lithium manganese-based oxide present as a secondary particle in which a plurality of primary particles agglomerate.

Primary particles constituting the lithium manganese-based oxide may have a rod shape, an oval shape and/or an irregular shape. In addition, primary particles having various shapes are present in the same positive electrode active material unless specifically intended in the manufacturing process.

The primary particles constituting the lithium manganese-based oxide defined herein may have an average particle size of 0.1 to 5 µm, preferably, 0.1 to 1.0 µm, and more preferably, 0.25 to 0.75 µm. Here, the average particle size of the primary particles may be the average value of the length of the primary particle in the major axis direction and the length of the primary particle in the minor axis direction ([major axis length + minor axis length]/2).

When the lithium manganese-based oxide is present as a secondary particle in which a plurality of primary particles agglomerate, the average particle size of the secondary particles may range from 0.5 to 15 µm. The average particle size of the secondary particles may vary depending on the number of the primary particles constituting the secondary particle.

Unless defined otherwise, the term "surface of the primary particle" used herein refers to the outermost surface of the primary particle exposed to the outside. Likewise, the term "surface of the secondary particle" used herein refers to the outermost surface of the secondary particle exposed to the outside. Here, the "surface of the secondary particle" formed by agglomerating a plurality of primary particles corresponds to the exposed surface of the primary particle present on the surface portion of the secondary particle.

In addition, unless defined otherwise, the term "surface portion of a particle" used herein refers to a region relatively close to the "outermost surface" of a particle, and the "central portion of a particle" refers to a region relatively close to the "exact center" of a particle compared to the "surface portion." Accordingly, the "surface portion of a primary particle" refers to the region relatively close to the "outermost surface" of the primary particle, and the "central portion of a primary particle" refers to the region relatively close to the "exact center" of the primary particle compared to the "surface portion." Likewise, the "surface portion of a secondary particle" refers to the region relatively close to the "outermost surface" of the secondary particle, and the "central portion of a secondary particle" refers to the region relatively close to the "exact center" of the secondary particle compared to the "surface portion."

Here, a region excluding the "surface portion of a particle" within any particle may be defined as the "central portion of a particle."

For example, when the radius of the primary particle is r, the region in which the distance from the surface of the primary particle is 0 to 0.5r may be defined as the surface portion of the primary particle, and the region in which the distance from the very center of the primary particle is 0 to 0.5r may be defined as the central portion of the primary particle. When the radius of the primary particle is 0.5 µm, the surface portion of the primary particle may be defined as the region in which the distance from the surface of the primary particle is 0 to 0.25 µm, and the central portion of the primary particle may be defined as the region in which the distance from the very center of the primary particle is 0 to 0.25 µm.

In addition, if necessary, when the radius of the primary particle is r, the region in which the distance from the surface of the primary particle is 0 to 0.1r or 0 to 0.2r may be defined as the surface portion of the primary particle, and the region in which the distance from the very center of the primary particle is 0 to 0.2r or 0 to 0.5r may be defined as the central portion of the primary particle.

Likewise, when the radius of the secondary particle is r, the region in which the distance from the surface of the secondary particle is 0 to 0.5r may be defined as the surface portion of the secondary particle, and the region in which the distance from the very center of the secondary particle is 0 to 0.5r may be defined as the central portion of the secondary particle. When the radius of the secondary particle is 2.0 µm, the surface portion of the secondary particle may be defined as the region in which the distance from the surface of the secondary particle is 0 to 1.0 µm, and the central portion of the secondary particle may be defined as the region in which the distance from the very center of the primary particle is 0 to 1.0 µm.

In addition, if necessary, when the radius of the secondary particle is r, the region in which the distance from the surface of the secondary particle is 0 to 0.1r or 0 to 0.2r may be defined as the surface portion of the secondary particle, and the region in which the distance from the very center of the secondary particle is 0 to 0.2r or 0 to 0.5r may be defined as the central portion of the secondary particle.

The lithium manganese-based oxide defined herein may be an overlithiated lithium manganese-based oxide represented by Chemical Formula 1 below. The composition represented by Chemical Formula 1 below may be the average composition reflecting the composition of a barrier layer present on at least a part of the surface of the lithium manganese-based oxide.

[Chemical Formula 1] Li(LiₐM1ₓM2_{y})O_{2-b}X_{b}

Wherein, M1 is at least one selected from Ni and Mn,
M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, and Nd, and M2 does not overlap with M1,
X is a halogen capable of substituting at least some of the oxygen present in the lithium manganese-based oxide, 0<a≤0.7, 0≤b≤0.1, 0<x≤1, 0≤y<1, and 0<x+y≤1.

For the type of halogen that can be used as X, refer to the periodic table, and F, Cl, Br and/or I may be used, and preferably, F may be used.

A gradient may be formed such that at least one proportion selected from x and y in Chemical Formula 1 changes from the surface portion of the primary particle to the central portion of the primary particle.

In addition, a gradient may be formed such that at least one proportion selected from x and y in Chemical Formula 1 changes from the surface portion of the secondary particle to the central portion of the secondary particle.

In addition, the overlithiated lithium manganese-based oxide represented by Chemical Formula 1 may further include a spinel phase in addition to a phase belonging to a C2/m space group and a phase belonging to an R3-m space group.

In another embodiment, the lithium manganese-based oxide may be represented by Chemical Formula 1-1 below. The composition represented by Chemical Formula 1-1 below may be the average composition reflecting the composition of a barrier layer present on at least a part of the surface of the lithium manganese-based oxide.

[Chemical Formula 1-1] rLi₂MnO_{3-b"}X'_{b"} ·( 1-r)Li_{a'}M1_{x'}M2_{y'}Q_{2-b'}X_{b'}

Wherein,
M1 is at least one selected from Ni and Mn,
M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, and Nd, and M2 does not overlap with M1,
X and X' are halogens capable of substituting at least some of the oxygens present in the lithium manganese-based oxide, 0<r≤0.7, 0<a'≤1, 0≤b'≤0.1, 0≤b"≤0.1, 0<x'≤1, 0≤y'<1, and 0<x'+y'≤1.

For the type of halogen that can be used as X refers to the periodic table, and F, Cl, Br and/or I may be used, and preferably, F may be used.

In Chemical Formulas 1 and 1-1, when M1 is Ni, M2 may include Mn, and when M1 is Mn, M2 may include Ni. In addition, when M1 is Ni and Mn, M2 may not be present, or when present, M2 may be an element other than Ni and Mn.

In other words, when M1 is Ni, M2 may include at least one selected from Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, and Nd (preferably, at least one selected from Co, Al, P, Nb, B, Si, Ti, Zr, Ba, K, Mo, and W, more preferably, at least one selected from Co, P, B, Si, Ti, Zr, and W, and even more preferably, at least one selected from P, B, and Si), and Mn.

When M1 is Mn, M2 may include at least one selected from Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, and Nd (preferably, at least one selected from Co, Al, P, Nb, B, Si, Ti, Zr, Ba, K, Mo, and W, more preferably, at least one selected from Co, P, B, Si, Ti, Zr, and W, and even more preferably, at least one selected from P, B, and Si), and Ni.

When M1 is Ni and Mn, M2 may include at least one selected from Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, and Nd, preferably, at least one selected from Co, Al, P, Nb, B, Si, Ti, Zr, Ba, K, Mo, and W, more preferably, at least one selected from Co, P, B, Si, Ti, Zr, and W, and even more preferably, at least one selected from P, B, and Si.

The lithium manganese-based oxide represented by Chemical Formula 1 or 1-1 may optionally include cobalt. When the lithium manganese-based oxide includes cobalt, the mole fraction of cobalt relative to the number of moles of all metal elements in the lithium manganese-based oxide may be 20% or less, preferably, 15% or less, and more preferably, 10% or less. In another case, the lithium manganese-based oxide represented by Chemical Formula 1 or 1-1 may have a cobalt-free composition in which cobalt is not included.

The Li/metal molar ratio measured from the lithium manganese-based oxide represented by Chemical Formula 1 or 1-1 may be greater than 1, preferably, 1.1 to 1.6. It is possible to form an overlithiated lithium manganese-based oxide when the Li/metal molar ratio measured from the lithium manganese-based oxide has a value greater than at least 1. In addition, in order for the lithium manganese-based oxide to properly form a solid solution in which a phase belonging to a C2/m space group and a phase belonging to an R3-m space group are dissolved or complexed and also exhibit a high capacity under a high voltage operating environment, the Li/metal molar ratio of the lithium manganese-based oxide is preferably 1.1 to 1.6.

In addition, to properly form a solid solution in which the phase belonging to the C2/m space group and the phase belonging to the R3-m space group are dissolved or complexed, the content of manganese among all metal elements except lithium present in a lithium manganese-based oxide represented by Chemical Formula 1 or 1-1 is preferably 50 mol% or more. In order for the lithium manganese-based oxide to have the characteristics of an OLO exhibiting a high capacity under a high voltage operating environment, the content of manganese among all metal elements except lithium in the lithium manganese-based oxide is more preferably 50 mol% or more and less than 80 mol%, and even more preferably, 55 to 75 mol%. When the content of manganese in the lithium manganese-based oxide is more than 80 mol%, a phase transition may occur due to the migration of a transition metal (particularly, manganese) in the lithium manganese-based oxide during formation and/or operation of a lithium secondary battery. This phase transition forms a spinel phase, and the spinel phase acting as an impurity in the lithium manganese-based oxide may induce a decrease in charge/discharge capacity or voltage decay during the cycling of a lithium secondary battery.

To properly form a solid solution in which the phase belonging to the C2/m space group and the phase belonging to the R3-m space group are dissolved or complexed, the content of nickel among all metal elements except lithium in the lithium manganese-based oxide represented by Chemical Formula 1 or 1-1 is preferably less than 50 mol%.

When the content of nickel in the lithium manganese-based oxide is 50 mol% or more, since it is difficult to sufficiently form the C2/m phase, or the phase belonging to the C2/m space group and the phase belonging to the R3-m space group cannot sufficiently form a solid solution, phase separation may be caused during formation and/or operation of a lithium secondary battery.

In addition, as to be described below, in order for nickel to be sufficiently present on the surface of the lithium manganese-based oxide provided as a core-shell particle in which a concentration gradient of transition metals is formed in the particle, the content of nickel in the lithium manganese-based oxide is preferably 25 to 45 mol%.

Generally, in a commercially-available ternary lithium composite oxide with a nickel-cobalt-manganese (NCM) or nickel-cobalt-aluminum (NCA) composition, the phase belonging to the R3-m space group is present as a single phase.

On the other hand, the overlithiated lithium manganese-based oxide represented by Chemical Formula 1 is present as a composite oxide in which an oxide of the phase belonging to the C2/m space group (hereinafter, referred to as "C2/m phase") represented by rLi₂MnO_{3-b"}X'_{b"} and an oxide of the phase belonging to the R3-m space group (hereinafter, referred to as "R3-m phase") represented by (1-r)Li_{a'}M1_{x'}M2_{y'}O_{2-b'}X_{b'} are dissolved or complexed. For example, the lithium manganese-based oxide may be present in a state in which the C2/m-phase oxide and the R3-m-phase oxide form a solid solution.

Here, a composite oxide in which the phase belonging to the C2/m space group and the phase belonging to the R3-m space group are simply physically and/or chemically combined or attached does not correspond to the solid solution defined therein.

For example, a composite oxide having the phase belonging to the C2/m space group whose surface is coated with a metal oxide with the phase belonging to the R3-m space group by mixing a metal oxide having the phase belonging to the C2/m space group and the metal oxide with the phase belonging to the R3-m space group does not correspond to the solid solution defined herein.

In the lithium manganese-based oxide represented by Chemical Formula 1-1, when r is more than 0.7, the proportion of Li₂MnO_{3-b"}X'_{b"}, which is a C2/m phase oxide, in the lithium manganese-based oxide increases excessively, and as a result, the irreversible capacity and resistance of the positive electrode active material increase, which may decrease the discharge capacity. That is, to improve surface kinetics by sufficiently activating a C2/m-phase oxide with relatively high resistance in the lithium manganese-based oxide, the R3-m phase oxide is preferably present in a predetermined proportion or more.

The lithium manganese-based oxide defined herein is present as a core-shell particle in which at least one transition metal constituting the lithium manganese-based oxide exhibits a concentration gradient from the core to the shell. Here, the dissolution of a transition metal from the lithium manganese-based oxide can be inhibited or mitigated by making the content of a transition metal having a relatively low possibility of dissolution greater than that of other transition metals in the region corresponding to the shell.

In addition, by forming the lithium manganese-based oxide as a core-shell particle in which at least one transition metal constituting the lithium manganese-based oxide exhibits a concentration gradient, the charge-transfer and/or diffusion (i.e., surface kinetics) of lithium ions on the surface of the lithium manganese-based oxide can be improved.

When the concentrations of a transition metal present in the shell (or surface portion) and the core (or central portion) of any particle are different, the particle may be referred to as a core-shell particle. That is, the lithium manganese-based oxide is a core-shell particle, and the average compositions of all metal elements constituting the lithium manganese-based oxide in the core and the shell may be different from each other. Therefore, the ratio of phases belonging to the C2/m space group and the R3-m space group in the core may be different from the ratio of phases belonging to the C2/m space group and the R3-m space group in the shell.

The shell may occupy at least a part of the surface of the core. That is, the shell may occupy the surface of the core partially or entirely.

In the present invention, when the number of moles of all metal elements in the lithium manganese-based oxide is defined as M¹, and the number of moles of nickel therein is defined as M², M²/M¹ calculated from the average composition of all metal elements in the core of the lithium manganese-based oxide may be different from M²/M¹ calculated from the average composition of all metal elements in the shell of lithium manganese-based oxide.

It is well known that the overlithiated lithium manganese-based oxide containing an excess amount of Mn has lower electrical conductivity than a lithium-cobalt oxide or a ternary lithium composite oxide with a nickel-cobalt-manganese (NCM) or nickel-cobalt-aluminum (NCA) composition containing a relatively large amount of Ni. In addition, the ternary lithium composite oxide also has a problem in that the electrical conductivity decreases as the Mn content increases.

Various reactions occur on the surface of the various types of positive electrode active materials, and as the Mn content in the positive electrode active material increases, the charge transfer and/or diffusion of lithium ions on the surface is hindered. This phenomenon may be referred to as the reduction in surface kinetics or surface reaction kinetics.

As described above, the lithium manganese-based oxide defined herein may improve the surface kinetics of the lithium manganese-based oxide by forming the concentration gradient of transition metals between the core and the shell. This effect can be achieved by the difference in concentration of transition metals in the core and the shell or the concentration gradient of transition metals formed between the core and the shell of a primary particle, a secondary particle, a crystallite, and/or a single particle, which will be described below.

According to one embodiment, the lithium manganese-based oxide in the positive electrode active material is present in at least one selected from a single primary particle and a secondary particle in which a plurality of primary particles agglomerate, and the primary particle may be a core-shell particle in which at least one transition metal exhibits a concentration gradient from the central portion of the primary particle to the surface portion of the primary particle. The lithium manganese-based oxide present in the form of a secondary particle may be an agglomerate of primary particles present as a core-shell particle.

When the primary particle is present as a core-shell particle in which at least one transition metal exhibits a concentration gradient from the core to the shell, the surface kinetics of the primary particle and/or the secondary particle may be improved.

For example, the primary particle may have the concentration of at least one selected from nickel and manganese exhibiting a gradient from the core to the shell. More specifically, the primary particle may exhibit a concentration gradient in which the concentration of nickel increases from the core to the shell while the concentration of manganese decreases.

In addition, when the concentration gradient of transition metals is shown from the core to the shell of the primary particle, a rapid change in the concentration of metal elements between the core and the shell of the primary particle may be reduced. By preventing the rapid change in the concentration of metal elements in the primary particle, the instability of the crystal structure of the primary particle may be prevented.

When a region in which the concentration gradient of transition metals is present in the above-described primary particle present as a core-shell particle is referred to as the shell of the primary particle, the average thickness of the shell may range from 0.1 nm to 2 µm, and preferably, 50 nm to 1 µm. When the thickness of the shell in the primary particle is less than 0.1 nm, it may be difficult to sufficiently improve the surface kinetic of the primary particle. On the other hand, when the thickness of the shell in the primary particle is greater than 2 µm, it may be disadvantageous for exhibiting high capacity under a high voltage operating environment, which is one of the advantages of the lithium manganese-based oxide.

According to another embodiment, the primary particle may include at least one crystallite. Here, the crystallite may have the above-described core-shell structure, and at least one transition metal may exhibit a concentration gradient from the central portion of the crystallite to the surface thereof.

For example, the crystallite may have the concentration of at least one selected from nickel and manganese exhibiting a gradient from the central portion of the crystallite to the surface portion thereof. More specifically, the crystallite may exhibit a concentration gradient in which the concentration of nickel increases from the central portion to the surface portion of the crystallite while the concentration of manganese decreases.

When the primary particle includes a plurality of crystallites, the plurality of crystallites constituting the primary particle may have the above-described core-shell structure. The crystallites with the core-shell structure may contribute to stabilizing the crystal structure of the primary particle while improving the low electrical conductivity of the lithium manganese-based oxide.

In the crystallite present in the above-described core-shell structure, a region in which the concentration gradient of a transition metal is formed is present in a region adjacent to the surface of the crystallite, and the average thickness of the region in which the concentration gradient of a transition metal is present in the crystallite may range from 0.1 to 500 nm. When the thickness of the region in which the concentration gradient of a transition metal is present in the crystallite is less than 0.1 nm, it may be difficult to sufficiently improve the surface kinetics of the crystallite and the primary particle consisting of the crystallites. On the other hand, when the thickness of the region in which the concentration gradient of a transition metal is present in the crystallite is greater than 500 nm, it may be disadvantageous for exhibiting high capacity under a high voltage operating environment, which is one of the advantages of the lithium manganese-based oxide.

According to still another embodiment, the secondary particle may be a core-shell particle in which at least one transition metal exhibits a concentration gradient from the central portion of the secondary particle to the surface portion thereof.

For example, the secondary particle may have the concentration of at least one selected from nickel and manganese exhibiting a gradient from the core to the shell. More specifically, the secondary particle may exhibit a concentration gradient in which the concentration of nickel increases from the core to the shell while the concentration of manganese decreases.

When, of the secondary particle present in the above-described core-shell structure, a region in which the concentration gradient of a transition metal is present is referred to as the shell of the secondary particle, the average thickness of the shell may range from 0.1 nm to 5 µm, and preferably, 100 nm to 2 µm. When the thickness of the shell in the secondary particle is less than 0.1 nm, it may be difficult to sufficiently improve the surface kinetics of the secondary particle. However, when thickness of the shell in the secondary particle is greater than 5 µm, it may be disadvantageous for exhibiting high capacity under a high voltage operating environment, which is one of the advantages of the lithium manganese-based oxide.

The concentration gradients present in the primary particle, the secondary particle, and/or the crystallite described above may inhibit and/or mitigate the phase transition that occurs as a transition metal in the particle migrates in an unintended direction.

In addition, when the content of a transition metal with a relatively low possibility of dissolution in the region corresponding to the shell is higher than that of other transition metals, the dissolution of a transition metal from the lithium manganese-based oxide may be inhibited or mitigated. By inhibiting or mitigating the dissolution of a transition metal from the lithium manganese-based oxide, it is possible to prevent the formation of impurities by the reaction between the transition metal dissolved on the surface and an electrolyte.

When the surface of the core-shell particle defined in the present invention, that is, the surface of the shell is covered with a barrier layer that is capable of inhibiting or mitigating the dissolution of a transition metal, the dissolution of a transition metal from the lithium manganese-based oxide may be further inhibited or mitigated.

When the secondary particle is present as a core-shell particle, the barrier layer can cover at least a part of the surface of the secondary particle, thereby inhibiting or mitigating the dissolution of a transition metal from the secondary particle. In addition, as the surface of the secondary particle is covered by the barrier layer, it is possible to prevent side reactions between the surface of the secondary particle and an electrolyte.

When a part of the surface of the secondary particle is covered with the barrier layer, the barrier layer may be present in an island shape. That is, even when at least a part of the surface of the secondary particle is covered by the barrier layer in an island shape, it is possible to inhibit or mitigate the dissolution of a transition metal due to the region covered with the barrier layer. Therefore, the presence of the barrier layer on the surface of the secondary particle should be distinguished from the fact that an oxide other than the lithium manganese-based oxide is simply dispersed on the surface of the secondary particle.

In addition, a grain boundary is defined between adjacent primary particles in the secondary particle, and the barrier layer may be present in a state of being diffused from the surface portion of the secondary particle to the central portion thereof along the grain boundary. As the barrier layer diffuses toward the central portion of the secondary particle, the elements mainly contained in the barrier layer may exhibit a concentration gradient that decreases from the surface portion of the secondary particle to the central portion thereof.

As the barrier layer exhibits a concentration gradient from the surface portion of the secondary particle to the central portion thereof, it effectively inhibit or mitigate the dissolution of a transition metal mainly from the surface portion of the secondary particle.

Some of the elements mainly contained in the barrier layer may be doped into the primary particle and/or the secondary particle.

The average thickness of the barrier layer covering the surface of the secondary particle may range from 0.1 nm to 1 µm.

When the average thickness of the barrier layer covering the secondary particle is less than 0.1 nm, it may be difficult to sufficiently suppress the dissolution of a transition metal from the secondary particle. On the other hand, when the average thickness of the barrier layer covering the secondary particle is greater than 1 µm, the surface kinetics of the secondary particle are likely to decrease, or the electrical conductivity of the secondary particle is likely to decrease.

When the primary particle is present as a core-shell particle, the barrier layer may cover at least a part of the surface of the primary particle, thereby inhibiting or mitigating the dissolution of a transition metal from the primary particle. In addition, the barrier layer may prevent side reactions between the surface of the primary particle and an electrolyte by covering the surface of the primary particle. Here, the barrier layer may cover the surface of the primary particle present on the surface portion of the secondary particle, thereby covering at least a part of the surface of the secondary particle. When the barrier layer covers a part of the surface of the primary particle and/or the secondary particle, the barrier layer may be present in an island shape.

The average thickness of the barrier layer covering the surface of the primary particle may range from 0.1 nm to 1 µm.

When the average thickness of the barrier layer covering the primary particle is less than 0.1 nm, it may be difficult to sufficiently inhibit the dissolution of a transition metal from the primary particle. On the other hand, when the average thickness of the barrier layer covering the primary particle is greater than 1 µm, the surface kinetics of the secondary particle are likely to decrease, or the electrical conductivity of the secondary particle is likely to decrease.

In addition, when the concentration gradient of a transition metal is formed in a crystallite constituting the primary particle, the region where the concentration gradient of a transition metal is present may be present in a region adj acent to the surface of the crystallite. Here, the barrier layer may cover at least a part of the surface of the primary particle, and the average thickness of the barrier layer may range from 0.1 nm to 1 µm.

According to one embodiment, the barrier layer may include a first oxide represented by Chemical Formula 2 below.

[Chemical Formula 2] Li_{c}B_{d}M3ₑO_{f}

Here, M3 is at least one selected from Ni, Mn, Co, Al, Nb, Si, Ti, Zr, Ba, K, Mo, Fe, Cu, Cr, Zn, Na, Ca, Mg, Pt, Au, Eu, Sm, W, Ce, V, Ta, Sn, Hf, Gd, and Nd, 0≤c≤8, 0<d≤8, 0≤e≤8, and 2≤f≤13.

When the first oxide represented by Chemical Formula 2 is a borate-based compound or a lithium borate (LBO)-based compound, non-limiting examples of the first oxide include B₂O₃, Li₂O-B₂O₃, Li₃BO₃, Li₂B₄O₇, Li₂B₂O₇, and Li₂B₈O₁₃. In addition, the first oxide may have a composition in which the above-mentioned borate-based compound or LBO-based compound is optionally doped with a different type of element, M3.

Here, due to the diffusion and/or doping of the first oxide included in the barrier layer, a gradient in which the concentration of at least one selected from B and M3 decreases from the barrier layer to the core of the lithium manganese-based oxide may be formed.

Such a concentration gradient serves as a path for lithium ions to move in the primary particle and between the primary particles, and thus the transport/diffusion efficiency of lithium ions mediated by the primary particle may be improved.

According to another embodiment, the barrier layer may further include a second oxide represented by Chemical Formula 3 below.

[Chemical Formula 3] Li_{g}M4ₕOᵢ

Here, M4 is at least one selected from Ni, Mn, Co, Al, Nb, Si, Ti, Zr, Ba, K, Mo, Fe, Cu, Cr, Zn, Na, Ca, Mg, Pt, Au, Eu, Sm, W, Ce, V, Ta, Sn, Hf, Gd, and Nd, 0≤g≤8, 0≤h≤8, and 2≤i≤13, and the case in which both g and h are 0 is excluded.

Non-limiting examples of the second oxide represented by Chemical Formula 3 include Li_{g}ZrₕOᵢ, Li_{g}TiₕOᵢ, Li_{g}NiₕOᵢ, Li_{g}NbₕOᵢ, Li_{g}CoₕOᵢ, Li_{g}SiₕOᵢ, Li_{g}AlₕOᵢ, CoₕOᵢ, MnₕOᵢ, AlₕOᵢ, SiₙOᵢ, ZrₕOᵢ, and TiₕOᵢ.

Here, due to the diffusion and/or doping of the second oxide included in the barrier layer, a gradient in which the concentration of M4 decreases from the barrier layer to the core of the lithium manganese-based oxide may be formed.

According to still another embodiment, the barrier layer may include a third oxide represented by Chemical Formula 4 below.

[Chemical Formula 4] LiⱼM5ₖ(PₗOₘ)ₙ

Here, M5 is at least one selected from Ni, Mn, Co, Al, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, and Nd, 0≤j≤10, 0≤k≤8, 0<l≤4, 0<m≤10, and 0<n≤13, and the case in which both j and k are 0 is excluded.

Non-limiting examples of the third oxide represented by Chemical Formula 4 include Liⱼ (PₗOₘ)ₙ, LiⱼAlₖ(PₗOₘ)ₙ, Alₖ(PₗOₘ)ₙ, (PₗOₘ)ₙ, LiⱼMnₖ(PₗOₘ)ₙ, Mnₖ(PₗOₘ)ₙ, LiⱼNiₖ(PₗOₘ)ₙ, _{and} Niₖ(PₗOₘ)ₙ.

Here, due to the diffusion and/or doping of the third oxide included in the barrier layer, a gradient in which the concentration of at least one selected from M5 and P decreases from the barrier layer to the core of the lithium manganese-based oxide may be formed.

It is known that a decrease in charge/discharge capacity or voltage decay during the cycling of a lithium secondary battery using OLO is caused by a phase transition caused by the migration of a transition metal in the lithium manganese-based oxide. For example, when a transition metal in a lithium manganese-based oxide having a layered crystal structure migrates in an unintended direction to induce a phase transition, a spinel or a crystal structure similar thereto may be generated entirely and/or partially in the lithium manganese-based oxide.

However, unlike the spinel phase formed by the phase transition caused by the migration of a transition metal in the lithium manganese-based oxide, when a spinel phase is formed on the surface of the primary particle and/or the secondary particle and the crystal growth or particle growth of primary particles constituting the lithium manganese-based oxide is induced at the same time, such a spinel phase may not only contribute to the surface stabilization of the lithium manganese-based oxide, but may also serve as a 2D and/or 3D path through which lithium ions in the lithium manganese-based oxide diffuse. The spinel phase present on the surface(s) of the primary particle and/or the secondary particle may be represented by Chemical Formula 4.

Accordingly, as a spinel-phase compound is present in the barrier layer present to inhibit the dissolution of a transition metal from the primary particle and/or the secondary particle, even when the surface of the primary particle and/or the secondary particle is covered with the barrier layer, the lithium manganese-based oxide may exhibit an appropriate level of electrical conductivity.

In addition, if needed, the barrier layer may include at least two oxides selected from the first to third oxides in order to effectively inhibit or mitigate the dissolution of a transition metal from the lithium manganese-based oxide, and at the same time, improve the surface kinetics of the lithium manganese-based oxide.

Meanwhile, generally, it is known that a ternary lithium composite oxide with a NCM or NCA composition containing a relatively large amount of Ni has a rapid thermogravimetric loss starting at approximately 700 °C, whereas an overlithiated lithium manganese-based oxide does not have thermogravimetric loss until approximately 900 °C. Accordingly, no thermogravimetric loss occurs in the range of 400 to 700 °C in the thermogravimetric analysis of a lithium manganese-based oxide that has not been surface-modified separately.

Meanwhile, as defined herein, the lithium manganese-based oxide in which at least a part of the surface of the primary particle and//or the secondary particle is covered with the barrier layer begins to experience thermogravimetric loss at approximately 500 °C, and the thermogravimetric loss of the lithium manganese-based oxide may be confirmed at 700 °C.

Here, the thermogravimetric loss confirmed by thermogravimetric analysis for the lithium manganese-based oxide may be caused by a component constituting the barrier layer. Accordingly, as the content of the barrier layer present in the lithium manganese-based oxide increases, the thermogravimetric loss confirmed from the thermogravimetric analysis for the lithium manganese-based oxide may increase.

When the thermogravimetric loss occurring by heat treatment of the lithium manganese-based oxide under an inert gas atmosphere is analyzed, the difference (y-x) between the weight loss rate (x) of the lithium manganese-based oxide at 400 °C and the weight loss rate (y) of the lithium manganese-based oxide at 700 °C is preferably 0.03 wt% or more, and to effectively inhibit or mitigate the dissolution of a transition metal from the lithium manganese-based oxide, it is more preferable 0.10 wt% or more.

The difference (y-x) in weight loss rate being less than 0.03 wt% means that a barrier layer for inhibiting or mitigating the dissolution of a transition metal is insufficiently formed on the surface of the lithium manganese-based oxide.

In addition, the main components of the barrier layer calculated based on all metal elements excluding lithium, present in the lithium manganese-based oxide, is preferably more than 0.1 mol% and less than 5 mol%. Here, when the first oxide is present in the barrier layer, the main components of the barrier layer are boron (B) and M3, and when the second oxide is present in the barrier layer, the main component of the barrier layer is M4, and when the third oxide is present in the barrier layer, the main component of the barrier layer is M5. In addition, when any combination of the first to third oxides is present in the barrier layer, the main component of the barrier layer is selected from boron (B), M3, M4 and M5.

That the content of the main component of the barrier layer is smaller than 0.1 mol% means that a barrier layer for inhibiting or mitigating the dissolution of a transition metal is insufficiently formed on the surface of the lithium manganese-based oxide. Accordingly, it is difficult to effectively prevent the lifetime deterioration of a lithium secondary battery from accelerating due to the deposition of impurities on a positive electrode and/or a negative electrode by a transition metal dissolved from the lithium manganese-based oxide.

On the other hand, when the content of the main components of the barrier layer is 5 mol% or more, the surface kinetics of the lithium manganese-based oxide may decrease and thus electrochemical properties may decrease, compared to when the main components of the barrier layer are present at appropriate contents.

In addition, in order to effectively inhibit or mitigate the dissolution of a transition metal from the surface of the lithium manganese-based oxide within a range in which the surface kinetics of the lithium manganese-based oxide are not degraded, the content of the main components of the barrier layer calculated based on all metal elements excluding lithium, present in the lithium manganese-based oxide, is more preferably 1±0.1 mol% or more and 3±0.1 mol% or less (specifically, 0.9 to 3.1 mol%, and more specifically, 0.98 to 3.04 mol%).

### Lithium secondary battery

According to one embodiment of the present invention, an electrochemical device using a positive electrode active material including a lithium manganese-based oxide in which a phase belonging to the C2/m space group and a phase belonging to the R3-m space group are dissolved or complexed is provided. The electrochemical device may be specifically a battery or a capacitor, and more specifically, a lithium secondary battery.

The lithium secondary battery may specifically include a positive electrode, a negative electrode disposed opposite to the positive electrode, and a separator and an electrolyte, which are interposed between the positive electrode and the negative electrode.

The lithium secondary battery may further include a battery case accommodating an electrode assembly of the positive electrode, the negative electrode and the separator, and optionally, a sealing member for sealing the battery case.

The positive electrode used in the lithium secondary battery includes a positive electrode current collector and a positive electrode active material layer formed on the positive electrode current collector. Here, the positive electrode active material layer may include lithium manganese-based oxides according to various embodiments of the present invention as a positive electrode active material.

Accordingly, a detailed description of the lithium manganese-based oxide will be omitted, and only the remaining components not described above will be described below. In addition, hereinafter, the above-described lithium manganese-based oxide is referred to as a positive electrode active material for convenience.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may generally have a thickness of 3 to 500 µm, and fine irregularities may be formed on the surface of the current collector, thereby increasing the adhesive strength of a positive electrode active material. For example, the positive electrode current collector may be used in various forms such as a film, a sheet, a foil, a net, a porous body, foam, a non-woven fabric, etc.

The positive electrode active material layer may be prepared by coating the positive electrode current collector with a positive electrode slurry composition including the positive electrode active material, a conductive material, and optionally a binder.

Here, the positive electrode active material is included at 80 to 99 wt%, and specifically, 85 to 98.5 wt% with respect to the total weight of the positive electrode active material layer. When the positive electrode active material is included in the above content range, excellent capacity characteristics may be exhibited, but the present invention is not limited thereto.

The conductive material is used to impart conductivity to an electrode, and is not particularly limited as long as it has electron conductivity without causing a chemical change in a battery. Specific examples of the conductive material may include graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be generally contained at 0.1 to 15 wt% with respect to the total weight of the positive electrode active material layer.

The binder serves to improve the adhesion between particles of the positive electrode active material and the adhesion between the positive electrode active material and a current collector. Specific examples of the binder may include polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated EPDM, styrene butadiene rubber (SBR), a fluoroelastomer, or various copolymers thereof, and one or a mixture of two or more thereof may be used. The binder may be included at 0.1 to 15 wt% with respect to the total weight of the positive electrode active material layer.

The positive electrode may be manufactured according to a conventional method of manufacturing a positive electrode, except that the above-described positive electrode active material is used. Specifically, the positive electrode may be manufactured by coating the positive electrode current collector with a positive electrode slurry composition prepared by dissolving or dispersing the positive electrode active material, and optionally, a binder and a conductive material in a solvent, and drying and rolling the resulting product.

The solvent may be a solvent generally used in the art, and may be dimethyl sulfoxide (DMSO), isopropyl alcohol, N-methylpyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material and the binder and then imparting a viscosity for exhibiting excellent thickness uniformity when the slurry is applied to manufacture a positive electrode.

In addition, in another exemplary embodiment, the positive electrode may be manufactured by casting the positive electrode slurry composition on a separate support, and laminating a film obtained by delamination from the support on the positive electrode current collector.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined carbon, or copper or stainless steel whose surface is treated with carbon, nickel, titanium or silver, or an aluminum-cadmium alloy. In addition, the negative electrode current collector may generally have a thickness of 3 to 500 µm, and like the positive electrode current collector, fine irregularities may be formed on the current collector surface, thereby enhancing the binding strength of the negative electrode active material. For example, the negative electrode current collector may be used in various forms such as a film, a sheet, a foil, a net, a porous body, foam, a non-woven fabric, etc.

The negative electrode active material layer may be formed by coating the negative electrode current collector with a negative electrode slurry composition including the negative electrode active material, a conductive material, and optionally a binder.

As the negative electrode active material, a compound enabling the reversible intercalation and deintercalation of lithium may be used. Specific examples of the negative electrode active material may include a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, a Si alloy, a Sn alloy or an Al alloy; a metal oxide capable of doping and dedoping lithium such as SiO_{β} (0<β<2), SnO₂, vanadium oxide, or lithium vanadium oxide; or a composite including the metallic compound and the carbonaceous material such as a Si-C composite or a Sn-C composite, and any one or a mixture of two or more thereof may be used. In addition, as the negative electrode active material, a metal lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, plate-like, flaky, spherical or fiber-like natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included at 80 to 99 wt% with respect to the total weight of the negative electrode active material layer.

The binder is a component aiding the bonding between a conductive material, an active material and a current collector, and may generally be added at 0.1 to 10 wt% with respect to the total weight of the negative electrode active material layer. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated-EPDM, styrene butadiene rubber, nitrile-butadiene rubber, a fluoroelastomer, and various copolymers thereof.

The conductive material is a component for further improving the conductivity of the negative electrode active material, and may be added at 10 wt% or less, and preferably, 5 wt% or less with respect to the total weight of the negative electrode active material layer. The conductive material is not particularly limited as long as it does not cause a chemical change in the battery, and has conductivity, and may be, for example, graphite such as natural graphite or artificial graphite; carbon black such as acetylene black, Ketjen black, channel black, furnace black, lamp black or thermal black; a conductive fiber such as a carbon fiber or a metal fiber; a metal powder such as fluorinated carbon, aluminum, or nickel powder; a conductive whisker such as zinc oxide or potassium titanate; a conductive metal oxide such as titanium oxide; or a conductive material such as a polyphenylene derivative.

In an exemplary embodiment, the negative electrode active material layer may be prepared by coating the negative electrode current collector with a negative electrode slurry composition prepared by dissolving or dispersing a negative electrode active material, and optionally, a binder and a conductive material in a solvent, and drying the coated composition, or may be prepared by casting the negative electrode slurry composition on a separate support and then laminating a film delaminated from the support on the negative electrode current collector.

Meanwhile, in the lithium secondary battery, the separator is not particularly limited as long as it is generally used in a lithium secondary battery to separate a negative electrode from a positive electrode and provide a diffusion path for lithium ions, and particularly, the separator has a low resistance to ion mobility of an electrolyte and an excellent electrolyte impregnation ability. Specifically, a porous polymer film, for example, a porous polymer film made of a polyolefin-based polymer such as an ethylene homopolymer, a propylene homopolymer, an ethylene/butene copolymer, an ethylene/hexene copolymer and an ethylene/methacrylate copolymer, or a stacked structure including two or more layers thereof may be used. In addition, a conventional porous non-woven fabric, for example, a non-woven fabric made of a high melting point glass fiber or a polyethylene terephthalate fiber may be used. In addition, a coated separator including a ceramic component or a polymer material may be used to ensure thermal resistance or mechanical strength, and may be optionally used in a single- or multi-layered structure.

In addition, the electrolyte used in the present invention may be an organic liquid electrolyte, an inorganic liquid electrolyte, a solid polymer electrolyte, a gel-type polymer electrolyte, a solid inorganic electrolyte, or a molten-type inorganic electrolyte, which is able to be used in the production of a lithium secondary battery, but the present invention is not limited thereto.

Specifically, the electrolyte may include an organic solvent and a lithium salt.

The organic solvent is not particularly limited as long as it can serve as a medium enabling the movement of ions involved in an electrochemical reaction of a battery. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic C2 to C20 hydrocarbon group, and may include a double bonded aromatic ring or an ether bond); an amide-based solvent such as dimethylformamide; a dioxolane-based solvent such as 1,3-dioxolane; or a sulfolane-based solvent. Among these, a carbonate-based solvent is preferably used, and a mixture of a cyclic carbonate (for example, ethylene carbonate or propylene carbonate) having high ion conductivity and high permittivity to increase the charge/discharge performance of a battery and a low-viscosity linear carbonate-based compound (for example, ethyl methyl carbonate, dimethyl carbonate or diethyl carbonate) is more preferably used. In this case, by using a mixture of a cyclic carbonate and a chain-type carbonate in a volume ratio of approximately 1:1 to 1:9, the electrolyte may exhibit excellent performance.

The lithium salt is not particularly limited as long as it is a compound capable of providing a lithium ion used in a lithium secondary battery. Specifically, the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂. The concentration of the lithium salt is preferably in the range of 0.1 to 2.0M. When the concentration of the lithium salt is included in the above-mentioned range, the electrolyte has suitable conductivity and viscosity and thus can exhibit excellent electrolyte performance. Therefore, lithium ions can effectively move.

When the electrolyte used herein is a solid electrolyte, for example, a solid inorganic electrolyte such as a sulfide-based solid electrolyte, an oxide-based solid electrolyte, a nitride-based solid electrolyte, or a halide-based solid electrolyte may be used, and preferably, a sulfide-based solid electrolyte is used.

As a material for the sulfide-based solid electrolyte, a solid electrolyte containing Li, an X element (here, X is at least one selected from P, As, Sb, Si, Ge, Sn, B, Al, Ga and In) and S may be used. Examples of the sulfide-based solid electrolyte material may include Li₂S-P₂S₅, Li₂S-P₂S-LiX (here, X is a halogen element such as I or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (here, m and n are integers, and Z is Ge, Zn or Ga), Li₂S-GeS₂, Li₂S-SiS₂-Li₃PO₄, and Li₂S-SiS₂-LiₚMO_{q} (here, p and q are integers, and M is P, Si, Ge, B, Al, Ga or In).

The solid electrolyte, preferably, a sulfide-based solid electrolyte, may be amorphous, crystalline, or a state in which an amorphous phase and crystalline phase are mixed.

Materials for the oxide-based solid electrolyte include Li₇La₃Zr₂O₁₂, Li₇₋ₓLa₃Zr₁₋ₓNbₓO₁₂, Li₇₋₃ₓLa₃Zr₂AlₓO₁₂, Li₃ₓLa_{2/3-x}TiO₃, Li₁₊ₓAlₓTi₂₋ₓ(PO₄)₃, Li₁₊ₓAlₓGe₂₋ₓ(PO₄)₃, Li₃PO₄, Li₃₊ₓPO₄₋ₓNₓ (LiPON), and Li₂₊₂ₓZn₁₋ₓGeO₄ (LISICON).

The above-described solid electrolyte may be disposed as a separate layer (solid electrolyte layer) between the positive and negative electrodes. In addition, the solid electrolyte may be partially included in the positive electrode active material layer of the positive electrode independent of the solid electrolyte layer, or the solid electrolyte may be partially included in the negative electrode active material layer of the negative electrode independent of the solid electrolyte layer.

To enhance the lifetime characteristics of the battery, inhibit a decrease in battery capacity, and enhance the discharge capacity of the battery, the electrolyte may further include one or more types of additives, for example, a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in addition to the components of the electrolyte. Here, the additive(s) may be included at 0.1 to 5 wt% with respect to the total weight of the electrolyte.

Since the lithium secondary battery including the positive electrode active material according to the present invention stably exhibits excellent discharge capacity, excellent output characteristics and excellent lifetime characteristics, it is useful in portable devices such as a mobile phone, a notebook computer and a digital camera and electric vehicles such as a hybrid electric vehicle (HEV).

The outer shape of the lithium secondary battery according to the present invention is not particularly limited, but may be a cylindrical, prismatic, pouch or coin shape using a can. In addition, the lithium secondary battery may not only be used as a battery cell used as a power source of a small device, but also preferably used as a unit battery in a medium-to-large battery module including a plurality of battery cells.

According to still another exemplary embodiment of the present invention, a battery module including the lithium secondary battery as a unit cell and/or a battery pack including the same is provided.

The battery module or the battery pack may be used as a power source of any one or more medium-to-large devices including a power tool; an electric motor vehicle such as an electric vehicle (EV), a hybrid electric vehicle, and a plug-in hybrid electric vehicle (PHEV); and a power storage system.

Meanwhile, the lithium secondary battery defined above may be subjected to at least one formation cycle in a formation voltage range in which the upper voltage limit (fv1) is 4.4V or more based on a positive electrode potential to activate the positive electrode active material including an overlithiated lithium manganese-based oxide.

Here, formation, also known as activation, refers to the process of activating a lithium secondary battery in an initially discharged state by charging/discharging it several times.

When the upper voltage limit (fv1) of the formation voltage range for the lithium secondary battery is less than 4.4V, the positive electrode active material, especially the phase belonging to the C2/m space group in the positive electrode active material, may not be sufficiently activated, making it difficult for the lithium secondary battery to exhibit sufficient capacity characteristics. Accordingly, as the lithium secondary battery may be subjected to at least one formation cycle in a formation voltage range in which the upper voltage limit (fv1) is 4.4V or more based on a positive electrode potential, the activation of the positive electrode active material including an overlithiated lithium manganese-based oxide may be induced.

In addition, during the formation of the lithium secondary battery, by applying the upper voltage limit (fv1) of the formation voltage range of the first cycle to 4.4V or more, the problem of insufficient activation of the positive electrode active material can be prevented in advance.

Meanwhile, when the upper voltage limit (fv1) of the formation voltage range is excessively high, the side reactions between the lithium manganese-based oxide included in the positive electrode active material and an electrolyte may be accelerated, rapidly reducing the capacity retention rate and average discharge voltage retention rate of the lithium secondary battery. Accordingly, when the upper voltage limit (fv1) of the formation voltage range is set to less than 5.0V, preferably, 4.75V or less, and more preferably, 4.6V or less, the characteristics related to the capacity and lifetime of the lithium secondary battery can be improved.

In addition, the lower voltage limit (fv2) of the formation voltage range may be 2.0V or more and less than 3.0V. When the lower voltage limit (fv2) of the formation voltage range is less than 2.0V, an unnecessary structural change in the positive electrode active material may occur, or side reactions may occur between the lithium manganese-based oxide included in the positive electrode active material and an electrolyte. On the other hand, when the lower voltage limit (fv2) of the formation voltage range is 3.0V or more, there is a concern that the discharge capacity of the lithium secondary battery may decrease due to the insufficient reduction reaction of the positive electrode active material.

Meanwhile, optionally, when the lower voltage limit (fv2) of the formation voltage range is high, the lower voltage limit (fv2) of the formation voltage range is set to 2.5V or more, and preferably, 2.5V, which may have a positive effect on improving the stability of the lithium secondary battery operating at high temperatures.

For example, after the lithium secondary battery is subjected to six formation cycles under the conditions of 25 °C, a formation voltage range of 2.5V to 4.6V, and 0.2C/0.2C, the volume change rate of the full-cell measured after 500 charge/discharge cycles under the conditions of 45 °C, an operating voltage range of 2.5V to 4.6V, and 1C/1C is 6% or less, which makes it possible to alleviate gas generation in a lithium secondary battery, especially a positive electrode.

In addition, to exhibit the high capacity characteristics of the lithium manganese-based oxide, it is preferable that, after formation, the lithium secondary battery is operated in an operating voltage range where the upper voltage limit (ov1) is greater than 4.3V and 5.0V or less, greater than 4.3V and 4.8V or less, or greater than 4.3V and 4.6V or less.

To increase the charge/discharge efficiency of the lithium secondary battery and improve the characteristics related to the capacity and lifetime of the lithium secondary battery, after formation, the lithium secondary battery may be operated in an operating voltage range where the lower voltage limit (ov2) is 2.0V or more, and preferably, 2.0V or more and less than 3.0V.

In addition, it is preferable to set the operating conditions during operation of the lithium secondary battery such that the difference (ov1-ov2) between the upper voltage limit (ov1) and the lower voltage limit (ov2) in the operating voltage range is greater than 1.6V and less than 2.6V.

The difference (ov1-ov2) between the upper voltage limit (ov1) and the lower voltage limit (ov2) in the operating voltage range is 1.6V or less means that the upper voltage limit (ov1) of the operating voltage range is excessively low, or the lower voltage limit (ov2) thereof is excessively high. When the upper voltage limit (ov1) of the operating voltage range is excessively low, or the lower voltage limit (ov2) thereof is excessively high, there is a concern that the discharge capacity of the discharge capacity of the lithium secondary battery may decrease excessively.

On the other hand, that the difference (ov1-ov2) between the upper voltage limit (ov1) and the lower voltage limit (ov2) in the operating voltage range is 2.6V or more means that the upper voltage limit (ov1) of the operating voltage range is excessively high or the lower voltage limit (ov2) thereof is excessively low. In this case, as the difference between the upper voltage limit (ov1) and the lower voltage limit (ov2) in the operating voltage range increases, the charge/discharge efficiency of the lithium secondary battery may decrease.

Meanwhile, when the upper voltage limit (ov1) of the operating voltage range is excessively high, the capacity retention rate and average discharge voltage retention rate of the lithium secondary battery may be drastically lowered. In addition, when the lower voltage limit (ov2) of the operating voltage range is excessively low, the average discharge voltage and average discharge voltage retention rate of the lithium secondary battery may be reduced. The lower voltage limit (ov2) of the operating voltage range may also affect the stability of the lithium secondary battery, and the stability of the lithium secondary battery may be confirmed as an indicator associated with gas generation in a lithium secondary battery, such as a volume change rate.

When the operating voltage range of the lithium secondary battery defined herein is set, an appropriate lower voltage limit (ov2) may vary depending on the upper voltage limit (ov1). Conversely, when the operating voltage range of the lithium secondary battery defined herein is set, an appropriate upper voltage limit (ov1) may vary depending on the lower voltage limit (ov2).

According to one embodiment, when the upper voltage limit (ov1) of the operating voltage range during operation of the lithium secondary battery is 4.6V or more (e.g., 4.6V to 5.0V, or 4.6V to 4.8V), the lower voltage limit (ov2) may be set to be within the range of greater than 2.0V and less than 3.0V (e.g., 2.5V±0.25V).

Specifically, when the upper voltage limit (ov1) of the operating voltage range is 4.6V or more, the lower voltage limit (ov2) may be set to be in the range of greater than 2.0V and less than 3.0V, and preferably, 2.5V±0.25V (e.g., approximately 2.5V), thereby realizing the stable capacity and lifetime characteristics of a lithium secondary battery and ensuring the stability thereof (low volume change rate).

When the lower voltage limit (ov2) of the operating voltage range is 2.0V or less, it is difficult to ensure the sufficient charge/discharge efficiency of the lithium secondary battery, and there is a concern that the stability of the lithium secondary battery may be degraded. On the other hand, when the lower voltage limit (ov2) of the operating voltage range is 3.0V or more, the discharge capacity and capacity retention rate of the lithium secondary battery may be reduced.

For example, after performing at least one formation cycle on the lithium secondary battery prepared by the method defined herein (e.g., Preparation Example 2 or 3) in a formation voltage range where the upper voltage limit (fv1) is 4.4V or more, and charging/discharging the lithium secondary battery in an operating voltage range where the upper voltage limit (ov1) is 4.6V or more (e.g., 4.6V to 5.0V, or 4.6V to 4.8V) and the lower voltage limit (ov2) is greater than 2.0V and less than 3.0V, the ratio of the discharge capacity measured after 300 charge/discharge cycles to the initial discharge capacity of the lithium secondary battery (discharge capacity retention rate) may be at least 90% or more, and preferably, 91% or more.

In addition, when the lithium secondary battery is charged/discharged in the same manner as described above, the ratio of an average discharge voltage (average discharge voltage retention rate) measured after 300 charge/discharge cycles to the initial average discharge voltage of the lithium secondary battery may be greater than 97.2%, and preferably, 98% or more.

In another embodiment, when the upper voltage limit (ov1) of the operating voltage range during operation of the lithium secondary battery is 4.5V or more and less than 4.6V, it is preferable to set the lower voltage limit (ov2) to be within the range of 2.0V or more and less than 3.0V.

Specifically, when the upper voltage limit (ov1) of the operating voltage range is 4.5V or more and less than 4.6V, the lower voltage limit (ov2) may be set to be within the range of 2.0V or more and less than 3.0V, and preferably, 2.0V to 2.5V, thereby realizing the stable capacity and lifetime characteristics of the lithium secondary battery and ensuring the stability thereof (low volume change rate).

When the lower voltage limit (ov2) of the operating voltage range is less than 2.0V, it is difficult to ensure the sufficient charge/discharge efficiency of the lithium secondary battery, and there is a concern that the stability of the lithium secondary battery may be degraded. On the other hand, when the lower voltage limit (ov2) of the operating voltage range is 3.0V or more, the discharge capacity and capacity retention rate of the lithium secondary battery may be reduced.

For example, after performing at least one formation cycle on the lithium secondary battery prepared in the method defined herein (e.g., Preparation Example 2 or 3) in a formation voltage range where the upper voltage limit (fv1) is 4.4V or more and charging/discharging the lithium secondary battery in an operating voltage range where the upper voltage limit (ov1) is 4.5V or more and less than 4.6V and the lower voltage limit (ov2) is 2.0V or more and less than 3.0V, the ratio of discharge capacity measured after 300 charge/discharge cycles to the initial discharge capacity of the lithium secondary battery (discharge capacity retention rate) may be at least 92.5% or more, and preferably, 95% or more.

In addition, when charging/discharging the lithium secondary battery in the same manner as described above, the ratio of an average discharge voltage (average discharge voltage retention rate) measured after 300 charge/discharge cycles to the initial average discharge voltage of the lithium secondary battery may be 98% or more.

In another embodiment, when the upper voltage limit (ov1) of the operating voltage range during operation of the lithium secondary battery is less than 4.5V (e.g., greater than 4.3V and less than 4.5V), the lower voltage limit (ov2) may be set to be within the range of 2.0V or more and less than 3.0V.

Specifically, when the upper voltage limit (ov1) of the operating voltage range is less than 4.5V, the lower voltage limit (ov2) may be set to be in the range of 2.0V or more and less than 3.0V, and preferably, 2.0V to 2.5V, thereby realizing the stable capacity and lifetime characteristics of the lithium secondary battery and ensuring the stability thereof (low volume change rate).

When the lower voltage limit (ov2) of the operating voltage range is less than 2.0V, it is difficult to ensure the sufficient charge/discharge efficiency of the lithium secondary battery, and there is a concern that the stability of the lithium secondary battery may be degraded. On the other hand, when the lower voltage limit (ov2) of the operating voltage range is 3.0V or more, the discharge capacity and capacity retention rate of the lithium secondary battery may be reduced.

For example, after performing at least one formation cycle on the lithium secondary battery prepared in the method defined herein (e.g., Preparation Example 2 or 3) in a formation voltage range where the upper voltage limit (fv1) is 4.4V or more and charging/discharging the lithium secondary battery in an operating voltage range where the upper voltage limit (ov1) is less than 4.5V (e.g., greater than 4.3V and less than 4.5V) and the lower voltage limit (ov2) is 2.0V or more and less than 3.0V, the ratio of discharge capacity measured after 300 charge/discharge cycles to the initial discharge capacity of the lithium secondary battery (discharge capacity retention rate) may be at least 95.5% or more, and preferably, 96% or more.

In addition, when the lithium secondary battery is charged/discharged in the same manner as described above, the ratio of an average discharge voltage (average discharge voltage retention rate) measured after 300 charge/discharge cycles to the initial average discharge voltage of the lithium secondary battery may be 98% or more.

Hereinafter, the present invention will be described in further detail with reference to examples. However, these examples are merely provided to exemplify the present invention, and thus the scope of the present invention is not to be construed as being limited by these examples.

### Preparation Example 1. Preparation of positive electrode active material

### Example 1

### (a) Preparation of precursor

An aqueous solution in which NiSO₄·6H₂O and MnSO₄·H₂O were mixed in a molar ratio of 40:60, NaOH and NH₄OH were added to a reactor and stirred. The temperature in the reactor was maintained at 45 °C, and a precursor synthesis reaction was performed while inputting N₂ gas into the reactor. After the reaction was completed, washing and dehydration were performed, thereby obtaining a Ni_{0.4}Mn_{0.6}(OH)₂ precursor having an average particle size of 3.5 µm.

### (b) Precursor coating

An aqueous NiSO₄·6H₂O solution, NaOH, and NH₄OH were added to the reactor in which the precursor obtained in Step (a) was being stirred. Here, NiSO₄·6H₂O was weighed to be 5 mol% and added. After the reaction was completed, washing and dehydration were performed, and then drying was performed at 150°C for 14 hours, thereby obtaining a coated precursor.

### (c) First heat treatment

A precursor in an oxide state was obtained by raising the temperature of a furnace having an O₂ atmosphere at a rate of 2 °C/min, maintaining the furnace at 550 °C, thermally treating the precursor obtained in Step (b) for 5 hours, and then cooling the furnace.

### (d) Second heat treatment

A mixture was prepared by mixing the precursor in an oxide state obtained in Step (c) with a lithium raw material, LiOH (Li/(metals except Li) molar ratio = 1.25).

Subsequently, an overlithiated lithium manganese-based oxide was obtained by raising the temperature of a furnace having an O₂ atmosphere at a rate of 2 °C/min, maintaining the furnace at 900 °C, thermally treating the mixture for 8 hours, and cooling the furnace.

As a result of TEM/EDS analysis of the lithium manganese-based oxide, it was confirmed that a gradient was formed in which the Ni concentration increased from the central portion to the surface portion and the Mn concentration decreased through precursor coating using Ni in Step (b).

### (e) Third heat treatment (formation of barrier layer)

The lithium manganese-based oxide obtained in Step (d) was mixed with H₃BO₃ in which the content of boron was weighed to be 1.0 mol% based on metal elements except lithium in the lithium manganese-based oxide, thermally treated in a furnace whose temperature was increased until 400 °C at a rate of 4.4 °C/min for 8 hours while maintaining an O₂ atmosphere, classified and disintegrated, thereby obtaining a final product (average particle diameter: 3.5 µm) in which a barrier layer containing a B-containing compound was formed on the surface thereof.

### Example 2

A positive electrode active material was prepared in the same manner as in Example 1, except that 2.0 mol% of H₃BO₃ was weighed and used in Step (e).

### Example 3

A positive electrode active material was prepared in the same manner as in Example 1, except that 3.0 mol% of H₃BO₃ was weighed and used in Step (e).

### Example 4

A positive electrode active material was prepared in the same manner as in Example 1, except that 2.0 mol% of H₃BO₃ was weighed and used in Step (e), and the third heat treatment was performed at a final temperature set to 300 °C.

### Example 5

### (e) Wet pretreatment

A lithium manganese-based oxide having SiO₂ dispersed on the surface thereof was obtained by adding the lithium manganese-based oxide obtained in Step (d) of Example 1 and SiO₂ in which the Si content was weighed to be 1.0 mol% based on the metal elements except lithium in the lithium manganese-based oxide to distilled water while stirring, and stirring the resulting solution at 40 °C for 12 hours.

### (f) Third heat treatment (formation of barrier layer)

The lithium manganese-based oxide obtained in Step (e) was thermally treated in a furnace whose temperature was increased until 400 °C at 4.4 °C/m for 8 hours while maintaining an O₂ atmosphere, classified and disintegrated, thereby obtaining a final product (average particle size: 3.5 µm) in which a barrier layer containing a Si-containing compound was formed on the surface thereof.

### Example 6

### (e) Wet pretreatment

Alithium manganese-based oxide having NH₄H₂PO₄ dispersed on the surface thereof was obtained by adding the lithium manganese-based oxide obtained in Step (d) of Example 1 and NH₄H₂PO₄ in which the P content was weighed to be 3.0 mol% based on the metal elements except lithium in the lithium manganese-based oxide to distilled water while stirring, and stirring the resulting solution at 40 °C for 12 hours.

### (f) Third heat treatment (Formation of barrier layer)

The lithium manganese-based oxide obtained in Step (e) was thermally treated in a furnace whose temperature was increased until 400 °C at 4.4 °C/min for 8 hours while maintaining an O₂ atmosphere, and then classified and disintegrated, thereby obtaining a final product (average particle size: 3.5 µm) in which a barrier layer containing a P-containing compound was formed on the surface thereof.

### Comparative Example 1

### (a) Preparation of precursor

An aqueous solution in which NiSO₄·6H₂O and MnSO₄·H₂O were mixed in a molar ratio of 40:60, NaOH and NH₄OH were added to a reactor and stirred. The temperature in the reactor was maintained at 45 °C, and a precursor synthesis reaction was performed while inputting N₂ gas into the reactor. After the reaction was completed, washing and dehydration were performed, thereby obtaining a Ni_{0.4}Mn_{0.6}(OH)₂ precursor having an average particle size of 3.5 µm.

### (b) First heat treatment

A precursor in an oxide state was obtained by raising the temperature of a furnace having an O₂ atmosphere at a rate of 2 °C/min, maintaining the furnace at 550 °C, thermally treating the precursor obtained in Step (a) for 5 hours, and then cooling the furnace.

### (c) Second heat treatment

A mixture was prepared by mixing the precursor in an oxide state obtained in Step (b) with a lithium raw material, LiOH (Li/metal molar ratio = 1.25).

Subsequently, a final product, overlithiated lithium manganese-based oxide (average particle size: 3.5 µm) was obtained by raising the temperature of a furnace having an O₂ atmosphere at a rate of 2 °C/min, maintaining the furnace at 900 °C, thermally treating the mixture for 8 hours, cooling the furnace, and then performing classification and disintegration.

Unlike the lithium manganese-based oxide of Example 1, the lithium manganese-based oxide of Comparative Example 1 was not subjected to precursor coating using Ni, so it can be confirmed that a transition metal concentration gradient was not formed in the particle.

### Comparative Example 2

### (a) Preparation of precursor

An aqueous solution in which NiSO₄·6H₂O and MnSO₄·H₂O were mixed in a molar ratio of 40:60, NaOH and NH₄OH were added to a reactor and stirred. The temperature in the reactor was maintained at 45 °C, and a precursor synthesis reaction was performed while inputting N₂ gas into the reactor. After the reaction was completed, washing and dehydration were performed, thereby obtaining a Ni_{0.4}Mn_{0.6}(OH)₂ precursor having an average particle size of 3.5 µm.

### (b) First heat treatment

A precursor in an oxide state was obtained by raising the temperature of a furnace having an O₂ atmosphere at a rate of 2 °C/min, maintaining the furnace at 550 °C, thermally treating the precursor obtained in Step (a) for 5 hours, and then cooling the furnace.

### (c) Second heat treatment

A mixture was prepared by mixing the precursor in an oxide state obtained in Step (b) with a lithium raw material, LiOH (Li/metal molar ratio = 1.25).

Subsequently, an overlithiated lithium manganese-based oxide was obtained by raising the temperature of a furnace having an O₂ atmosphere at a rate of 2 °C/min, maintaining the furnace at 900 °C, thermally treating the mixture for 8 hours, and then cooling the furnace.

### (d) Third heat treatment (formation of barrier layer)

After mixing the lithium manganese-based oxide obtained in Step (c) with H₃BO₃ in which the boron content was weighed to be 2.0 mol% based on the metal elements except lithium in the lithium manganese-based oxide, the resulting mixture was thermally treated in a furnace whose temperature was increased until 400 °C at 4.4 °C/min for 8 hours while maintaining an O₂ atmosphere, and then classified and disintegrated, thereby obtaining a final product (average particle size: 3.5 µm).

Unlike the lithium manganese-based oxide of Example 1, the lithium manganese-based oxide of Comparative Example 2 was not subjected to precursor coating using Ni, so it can be confirmed that a transition metal concentration gradient was not formed in the particle.

### Comparative Example 3

### (a) Preparation of precursor

An aqueous solution in which NiSO₄·6H₂O and MnSO₄·H₂O were mixed in a molar ratio of 40:60, NaOH and NH₄OH were added to a reactor and stirred. The temperature in the reactor was maintained at 45 °C, and a precursor synthesis reaction was performed while inputting N₂ gas into the reactor. After the reaction was completed, washing and dehydration were performed, thereby obtaining a Ni_{0.4}Mn_{0.6}(OH)₂ precursor having an average particle size of 3.5 µm.

### (b) Precursor coating

An aqueous NiSO₄·6H₂O solution, NaOH, and NH₄OH were added to a reaction in which the precursor obtained in Step (a) was being stirred. Here, NiSO₄·6H₂O was weighed to be 5 mol% and added. After the reaction was completed, washing and dehydration were performed, and then drying was performed at 150 °C for 14 hours, thereby obtaining a coated precursor.

### (c) First heat treatment

A precursor in an oxide state was obtained by raising the temperature of a furnace having an O₂ atmosphere at a rate of 2 °C/min, maintaining the furnace at 550 °C, thermally treating the precursor obtained in Step (b) for 5 hours, and then cooling the furnace.

### (d) Second heat treatment

A mixture was prepared by mixing the precursor in an oxide state obtained in Step (c) with a lithium raw material, LiOH (Li/metal molar ratio = 1.25).

Subsequently, a final product, overlithiated lithium manganese-based oxide (average particle size: 3.5 µm) was obtained by raising the temperature of a furnace having an O₂ atmosphere at a rate of 2 °C/min, maintaining the furnace at 900 °C, thermally treating the mixture for 8 hours, cooling the furnace, and then performing classification and disintegration.

As a result of TEM/EDS analysis of the lithium manganese-based oxide, it was confirmed that a gradient was formed in which the Ni concentration increased from the central portion to the surface portion and the Mn concentration decreased through precursor coating using Ni in Step (b).

### Comparative Example 4

### (a) Preparation of precursor

An aqueous solution in which NiSO₄·6H₂O and MnSO₄·H₂O were mixed in a molar ratio of 40:60, NaOH and NH₄OH were added to a reactor and stirred. The temperature in the reactor was maintained at 45 °C, and a precursor synthesis reaction was performed while inputting N₂ gas into the reactor. After the reaction was completed, washing and dehydration were performed, thereby obtaining a Ni_{0.4}Mn_{0.6}(OH)₂ precursor having an average particle size of 3.5 µm.

### (b) Precursor coating

An aqueous NiSO₄·6H₂O solution, NaOH, and NH₄OH were added to the reactor in which the precursor obtained in Step (a) was being stirred. Here, NiSO₄·6H₂O was weighed to be 5 mol% and added. After the reaction was completed, washing and dehydration were performed, and then drying was performed at 150 °C for 14 hours, thereby obtaining a coated precursor.

### (c) First heat treatment

A precursor in an oxide state was obtained by raising the temperature of a furnace having an O₂ atmosphere at a rate of 2 °C/min, maintaining the furnace at 550 °C, thermally treating the precursor obtained in Step (b) for 5 hours, and then cooling the furnace.

### (d) Second heat treatment

A mixture was prepared by mixing the precursor in an oxide state obtained in Step (c), a lithium raw material, LiOH (Li/(metals except Li) molar ratio = 1.25), and WO₃ in which the W content was weighed to be 1.0 mol% based on the metal elements except lithium in the precursor.

Subsequently, a final product, overlithiated lithium manganese-based oxide (average particle size: 3.5 µm) was obtained by raising the temperature of a furnace having an O₂ atmosphere at a rate of 2 °C/min, maintaining the furnace at 900 °C, thermally treating the mixture for 8 hours, cooling the furnace, and then performing classification and disintegration.

As a result of TEM/EDS analysis of the lithium manganese-based oxide, it was confirmed that a gradient was formed in which the Ni concentration increased from the central portion to the surface portion and the Mn concentration decreased through precursor coating using Ni in Step (b).

### Reference Example 1

A positive electrode active material was prepared in the same manner as in Example 1, except that 2.0 mol% of H₃BO₃ was weighed and used in Step (e) and the third heat treatment was performed at a final temperature set to 500 °C.

### Reference Example 2

A positive electrode active material was prepared in the same manner as in Example 1, except that 2.0 mol% of H₃BO₃ was weighed and used in Step (e) and the third heat treatment was performed at a final temperature set to 600 °C.

### Reference Example 3

A positive electrode active material was prepared in the same manner as in Example 1, except that 2.0 mol% of H₃BO₃ was weighed and used in Step (e) and the third heat treatment was performed at a final temperature set to 700 °C.

### Reference Example 4

A positive electrode active material was prepared in the same manner as in Example 1, except that 0.1 mol% of H₃BO₃ was weighed and used in Step (e) and the third heat treatment was performed at a final temperature set to 300 °C.

### Reference Example 5

A positive electrode active material was prepared in the same manner as in Example 1, except that 5.0 mol% of H₃BO₃ was weighed and used in Step (e) and the third heat treatment was performed at a final temperature set to 300 °C.

### Composition of lithium manganese-based oxide

The composition (the molar ratio per element) of the lithium manganese-based oxide included in the positive electrode active materials prepared according to Preparation Example 1 was measured by ICP, and the results are shown in Table 1 below.

**[Table 1]**

| Classificati on | Li/Me Molar ratio | Content (mol%) | | | | | | |
|---|---|---|---|---|---|---|---|---|
| | | Ni | Co | Mn | B | Si | P | W |
| Example 1 | 1.24 | 42.57 | - | 56.42 | 1.01 | - | - | - |
| Example 2 | 1.23 | 42.31 | - | 55.64 | 2.05 | - | - | - |
| Example 3 | 1.23 | 41.84 | - | 55.24 | 2.92 | - | - | - |
| Example 4 | 1.22 | 42.13 | - | 55.84 | 2.03 | - | - | - |
| Example 5 | 1.25 | 42.58 | - | 56.44 | - | 0.98 | - | - |
| Example 6 | 1.23 | 41.60 | - | 55.38 | - | - | 3.02 | - |
| Comparati ve Example 1 | 1.25 | 40.12 | - | 59.88 | - | - | - | - |
| Comparati ve Example 2 | 1.26 | 39.29 | - | 58.70 | 2.01 | - | - | - |
| Comparati ve Example 3 | 1.25 | 43.40 | - | 56.60 | - | - | - | - |
| Comparati ve Example 4 | 1.25 | 42.84 | - | 56.09 | - | - | - | 1.07 |
| Reference Example 1 | 1.24 | 42.11 | - | 55.83 | 2.06 | - | - | - |
| Reference Example 2 | 1.25 | 42.14 | - | 55.87 | 1.99 | - | - | - |
| Reference Example 3 | 1.24 | 42.04 | - | 55.95 | 2.01 | - | - | - |
| Reference Example 4 | 1.26 | 42.96 | - | 56.94 | 0.1 | - | - | - |
| Reference Example 5 | 1.24 | 40.93 | - | 54.04 | 5.03 | - | - | - |

| | | | | | | | | |
|---|---|---|---|---|---|---|---|---|
| * The Li/metal molar ratio is a molar ratio of lithium with respect to all elements except lithium in the lithium manganese-based oxide. * The element content (mol%) is calculated based on all elements except lithium in the lithium manganese-based oxide. | | | | | | | | |

### Preparation Example 2. Manufacture of lithium secondary battery (half-cell)

A positive electrode slurry was prepared by dispersing 90 wt% of each of the positive electrode active materials prepared according to Preparation Example 1, 4.5 wt% of carbon black and 5.5 wt% of a PVDF binder in N-methyl-2 pyrrolidone (NMP). The positive slurry was uniformly applied to a 15 µm-thick aluminum thin film and dried under vacuum at 135 °C, thereby manufacturing a positive electrode for a lithium secondary battery.

A half-cell was manufactured by using a lithium foil as a counter electrode for the positive electrode, a porous polyethylene film (Celgard 2300, thickness: 25 µm) as a separator, and an electrolyte in which LiPF₆ was present at a concentration of 1.15M in a solvent in which ethylene carbonate, dimethyl carbonate and ethyl methyl carbonate were mixed in a volume ratio of 2:4:4.

### Preparation Example 3. Manufacture of lithium secondary battery (full-cell)

A positive electrode slurry was prepared by dispersing 90 wt% of each of the positive electrode active materials prepared according to Preparation Example 1, 4.5 wt% of carbon black and 5.5 wt% of a PVDF binder in N-methyl-2 pyrrolidone (NMP). The positive slurry was uniformly applied to a 15 µm-thick aluminum thin film and dried under vacuum at 135 °C, thereby manufacturing a positive electrode for a lithium secondary battery.

A full-cell was manufactured by using a graphite electrode as a counter electrode for the positive electrode, a porous polyethylene film (Celgard 2300, thickness: 25 µm) as a separator, and an electrolyte in which LiPF₆ was present at a concentration of 1.15M in a solvent in which ethylene carbonate, dimethyl carbonate and ethyl methyl carbonate were mixed in a volume ratio of 2:4:4.

### Experimental Example 1. XPS analysis of positive electrode active material

XPS analysis was performed on a lithium manganese-based oxide selected from each of the positive electrode active materials prepared in Preparation Example 1 to measure the content of a target element contained in the lithium manganese-based oxide.

Specifically, using an XPS depth profile analysis method (ion energy 2000eV, spot size 200 µm), the change in the content of a target element was measured from the surface portion of the lithium manganese-based oxide (secondary particle) to the central portion of the lithium manganese-based oxide (secondary particle) as the etching time for the surface of the lithium manganese-based oxide was increased.

The XPS analysis results are shown in Tables 2 and 3 below.

**[Table 2]**

| Classification | Target element | Content (at%) of target element on surface | Content (at%) of target element after etching for 100 sec | Content (at%) of target element after etching for 200 sec | Content (at%) of target element after etching for 400 sec |
|---|---|---|---|---|---|
| Example 1 | B | 28 | 6 | 0 | 0 |
| Example 2 | B | 42 | 9 | 7 | 0 |
| Example 5 | Si | 20 | 7 | 0 | 0 |
| Example 6 | P | 62 | 25 | 10 | 4 |
| Comparative Example 2 | B | 40 | 11 | 7 | 0 |
| Comparative Example 4 | W | 5 | 4.7 | 2.3 | 0.7 |

| | | | | | |
|---|---|---|---|---|---|
| * The content of target element (at%) is calculated based on all elements except lithium in the lithium manganese-based oxide. | | | | | |

Referring to the results in Table 2, it was confirmed that the content of a target element present on the surface of each of the lithium manganese-based oxides (secondary particles) according to Examples 1, 2, 5, and 6 was 20 at% or more. It is expected that the content of the target element derived from a raw material used in the third heat treatment on the surface of the lithium manganese-based oxide (secondary particle) is 20 at% or greater because a barrier layer was formed on the surface of the lithium manganese-based oxide (secondary particle).

On the other hand, in Comparative Example 4, as the etching time is increased, the content of the measured target element is reduced, but the content of a target element present on the surface of the lithium manganese-based oxide (secondary particle) was excessively less than that of the lithium manganese-based oxide according to Examples 1, 2, 5, and 6.

The above results are because the target element derived from the raw material used in the second heat treatment was mostly doped into the lithium manganese-based oxide (particularly, primary particle) instead of being present as a barrier layer on the surface of the lithium manganese-based oxide (secondary particle). In addition, as the etching time increases, the content of the target element decreases, which is also expected to be due to the doping and diffusion of the target element from the surface of the lithium manganese-based oxide to the central portion thereof.

Therefore, it can be confirmed that there is no physical barrier that can actually act as a barrier layer on the surface of lithium manganese-based oxide (secondary particle) according to Comparative Example 4.

**[Table 3]**

| Classification | Target element | Content (at%) of target element in surface portion | Content (at%) of target element after etching for 100 sec | Content (at%) of target element after etching for 200 sec | Content (at%) of target element after etching for 400 sec |
|---|---|---|---|---|---|
| Example 1 | Ni | 48 | 45 | 40 | 39 |
| | Mn | 52 | 55 | 60 | 61 |

| | | | | | |
|---|---|---|---|---|---|
| * The content of the target element is calculated by taking the sum of the contents of Ni and Mn among the total elements except lithium in the lithium manganese-based oxide as 100. | | | | | |

Referring to the results in Table 3, in the manufacture of the lithium manganese-based oxide according to Example 1, it can be confirmed that a gradient in which the Ni concentration increased from the central portion to the surface portion and the Mn concentration decreased was formed as precursor coating using Ni is performed.

### Experimental Example 2. Thermogravimetric analysis (TGA) of positive electrode active material

TGA was performed on a lithium manganese-based oxide selected from each of the positive electrode active materials prepared according to Preparation Example 1 to confirm whether a barrier layer was formed at an appropriate level on the surfaces of primary particles and/or secondary particles constituting the lithium manganese-based oxide.

TGA was performed under the following conditions, and the TGA results are shown in Table 4 below.
Specimen : lithium manganese-based oxide, 65 mg
Measurement atmosphere : Ar gas (gas flow rate: 60 mL/min)
Measurement conditions : temperature increase from 30 to 900 °C at 10 °C/min.

**[Table 4]**

| Classification | Rate of thermogravimetric loss (%) | | | | y-x |
|---|---|---|---|---|---|
| | 400 °C (x) | 500 °C | 600 °C | 700 °C (y) | |
| Example 1 | 99.97 | 99.99 | 99.90 | 99.83 | 0.14 |
| Example 2 | 99.97 | 99.98 | 99.84 | 99.69 | 0.28 |
| Example 6 | 99.89 | 99.86 | 99.80 | 99.31 | 0.59 |
| Comparative Example 3 | 99.97 | 99.99 | 100.01 | 100.01 | -0.04 |

Referring to the results in Table 4, it can be confirmed that the lithium manganese-based oxide according to Comparative Example 3 has practically no thermogravimetric loss at 400 °C and 700 °C when considering the error range. That is, it can be seen that the trend is consistent with the TGA results of typical lithium manganese-based oxides in which no thermogravimetric loss occurs up to approximately 900 °C.

On the other hand, it can be confirmed that the lithium manganese-based oxides according to Examples 1, 2, and 6 have thermogravimetric loss from approximately 500 to 600 °C. In addition, it can be confirmed that the thermogravimetric loss increases as the content of the barrier layer present in the lithium manganese-based oxides increases, as confirmed by TGA.

### Experimental Example 3. Evaluation of electrochemical properties of lithium secondary battery (half-cell)

The initial charge capacity, the initial discharge capacity, the initial reversible efficiency, and the rate capability (discharge capacity rate; C-rate) by a charge/discharge experiment conducted on the lithium secondary batteries (half-cells) manufactured in Preparation Example 2 using an electrochemical analyzer (Toyo, Toscat-3100) at 25 °C in a voltage range of 2.0V to 4.6V at a discharge rate of 0.1C to 5.0C.

The measurement results are shown in Table 5 below.

**[Table 5]**

| Classification | Initial charge capacity (0.1C-rate) | Initial discharge capacity (0.1 C-rate) | Initial reversible efficiency | Rate capability (2C/0.1C) | Rate capability (5C/0.1C) |
|---|---|---|---|---|---|
| Units | mAh/g | mAh/g | % | % | % |
| Example 1 | 251.1 | 225.2 | 89.7 | 81.7 | 71.7 |
| Example 2 | 250.2 | 226.6 | 90.6 | 83.0 | 72.8 |
| Example 3 | 247.2 | 225.5 | 91.3 | 81.2 | 70.0 |
| Example 4 | 248.7 | 226.1 | 90.9 | 81.0 | 70.5 |
| Example 5 | 250.2 | 225.5 | 90.1 | 79.9 | 69.4 |
| Example 6 | 226.9 | 224.3 | 98.9 | 80.5 | 69.9 |
| Comparative Example 1 | 252.1 | 214.1 | 84.9 | 71.6 | 58.2 |
| Comparative Example 2 | 253.4 | 221.4 | 87.4 | 74.8 | 60.6 |
| Comparative Example 3 | 249.1 | 219.4 | 88.1 | 78.2 | 68.0 |
| Comparative Example 4 | 247.5 | 219.2 | 88.6 | 82.3 | 69.9 |
| Reference Example 1 | 239.2 | 218.4 | 91.3 | 78.7 | 66.1 |
| Reference Example 2 | 234.6 | 212.0 | 90.4 | 74.8 | 60.9 |
| Reference Example 3 | 192.2 | 172.1 | 89.5 | 55.7 | 30.5 |
| Reference Example 4 | 246.6 | 221.2 | 89.7 | 78.3 | 67.6 |
| Reference Example 5 | 242.0 | 220.5 | 91.1 | 79.0 | 66.4 |

Referring to the results of evaluating the half-cells in Table 5, for Comparative Examples 1 and 2 in which there are no transition metal concentration gradient from the central portion of a particle to the surface portion thereof, regardless of whether a barrier layer is present on the particle surface, it can be confirmed that the rate capability is lower than that of a lithium secondary battery using the lithium manganese-based oxides according to Examples as a positive electrode active material.

For Reference Examples 1 to 3 in which the third heat treatment temperature for forming the barrier layer is high, it can be confirmed that the electro chemical properties such as the initial discharge capacity and the rate capability are rather degraded. It is expected that these results are because, as the third heat treatment temperature increased excessively, damage occurred to a lithium manganese-based oxide, such as the damage to the transition metal concentration gradient in a particle.

Meanwhile, it can be confirmed that Reference Examples 4 and 5 exhibit overall favorable electrochemical properties compared to Comparative Examples 1 to 4, but the improvement in rate capability is slightly less than that of Examples due to the raw material forming the barrier layer being too little or much.

### Experimental Example 4. Evaluation of electrochemical properties of lithium secondary battery (full-cell)

After completing six formation cycles conducted on the lithium secondary batteries (full-cells) manufactured in Preparation Example 3 using the positive electrode active materials according to Example 2 and Comparative Examples 2 to 4 using an electrochemical analyzer (Toyo, Toscat-3100) at 25 °C in a voltage range of 2.0V to 4.6V at 0.2C/0.2C, 500 charge/discharge cycles were performed under the conditions of 25 °C, a voltage range of 2.0V to 4.6V, and 1C/1C. Through the above charge/discharge experiments, the initial (1^{st} cycle) discharge capacity, and the ratios of the discharge capacity at the 100^{th} cycle, the 300^{th} cycle, and the 500^{th} cycle with respect to the initial discharge capacity (capacity retention rates) were measured.

The measurement results are shown in Table 6 below.

**[Table 6]**

| Classification | Initial discharge capacity (mAh/g) | Capacity retention rate (%) | | |
|---|---|---|---|---|
| | | 100^{th} cycle | 300^{th} cycle | 500^{th} cycle |
| Example 2 | 185.2 | 95.5 | 91.2 | 87.1 |
| Comparative Example 2 | 180.9 | 94.9 | 89.8 | 85.4 |
| Comparative Example 3 | 181.5 | 77.2 | 35.7 | 15.5 |
| Comparative Example 4 | 187.1 | 79.7 | 45.5 | 27.0 |

Referring to the full-cell evaluation results in Table 6, in Comparative Examples 3 and 4 in which the concentration gradient of a transition metal is formed from the central portion of a particle to the surface portion thereof, but no barrier layer is present on the particle surface, it can be confirmed that the capacity retention rate is rapidly reduced. The above results are expected to be due to the occurrence of an abnormal resistance phenomenon in a negative electrode when a transition metal is dissolved from the lithium manganese-based oxide, resulting in the accelerated deterioration of the lifetime of a lithium secondary battery.

Meanwhile, in Comparative Example 2 in no concentration gradient of a transition metal is formed from the central portion of a particle to the surface portion thereof, but a barrier layer is formed on the particle surface, it can be confirmed that the capacity retention rate is improved compared to Comparative Example 3 as the abnormal resistance phenomenon that occurred in Comparative Example 3 is reduced.

On the other hand, in Example 2 in which the concentration gradient of a transition metal is formed from the central portion of a particle to the surface portion thereof and a barrier layer is also formed on the particle surface, it can be confirmed that the capacity retention rate is greater than that of Comparative Example 2 by improving electrochemical properties such as preventing the dissolution of a transition metal from the lithium manganese-based oxide and improving particle surface kinetics.

### Experimental Example 5. Experiment on dissolution of transition metal

After completing six formation cycles conducted on the lithium secondary batteries (full-cells) manufactured in Preparation Example 3 using the positive electrode active materials according to Example 2 and Comparative Examples 2 to 4 using an electrochemical analyzer (Toyo, Toscat-3100) at 25 °C in a voltage range of 2.0V to 4.6V at 0.2C/0.2C, the full-cells were stabilized by two charge/discharge cycles performed under the conditions of 25 °C, a voltage range of 2.0V to 4.6V, and 0.05C/0.05C. Subsequently, after disassembling the full-cells, the negative electrode was washed with a diethyl carbonate solvent and vacuum-dried at 60 °C and then recovered.

Only a negative electrode active material was separated from the Cu foil (current collector) of the recovered negative electrode, and the separated negative electrode active material was analyzed by ICP to measure the Ni and Mn contents included in the negative electrode active material.

In addition, after completing six formation cycles conducted on the lithium secondary batteries (full-cells) manufactured in Preparation Example 3 using the positive electrode active materials according to Example 2 and Comparative Examples 2 to 4 using an electrochemical analyzer (Toyo, Toscat-3100) at 25 °C in a voltage range of 2.0V to 4.6V at 0.2C/0.2C, 500 charge/discharge cycles were performed under the conditions of 25 °C, a voltage range of 2.0V to 4.6V, and 1C/1C. Subsequently, the full-cells were stabilized by two charge/discharge cycles performed under the conditions of 25 °C, a voltage range of 2.0V to 4.6V, and 0.05C/0.05C. Subsequently, after disassembling the full-cells, the negative electrode was washed with a diethyl carbonate solvent and vacuum-dried at 60 °C and then recovered.

Only a negative electrode active material was separated from the Cu foil (current collector) of the recovered negative electrode, and the separated negative electrode active material was analyzed by ICP to measure the Ni and Mn contents included in the negative electrode active material.

The measurement results are shown in Table 7 below.

**[Table 7]**

| | After formation | | After 500 charge/discharge cycles | |
|---|---|---|---|---|
| Classification | Ni (ppm) | Mn (ppm) | Ni (ppm) | Mn (ppm) |
| Example 2 | 5 | 39 | 12 | 216 |
| Comparative Example 2 | 136 | 329 | 288 | 357 |
| Comparative Example 3 | 38 | 114 | 538 | 958 |
| Comparative Example 4 | 57 | 193 | 641 | 884 |

Referring to the results in Table 7, as expected in Experimental Example 4, it can be confirmed that the rapid deterioration of the lifetime of Comparative Examples 3 and 4 is due to the increased content of a transition metal deposited on the negative electrode active material after formation or 500 charge/discharge cycles.

Meanwhile, in Comparative Example 2 having a barrier layer formed in the same manner as in Example 2, it can be confirmed that the content of a transition metal dissolved to the negative electrode side is greater than that of Example 2. It is expected that the above results are because, in the lithium manganese-based oxide according to Example 2, a concentration gradient is formed such that the content of a transition metal with a relatively low possibility of dissolution is higher than that of other transition metals in the area corresponding to the surface (shell) of the particle, whereas in the lithium manganese-based oxide according to Comparative Example 2, the concentration gradient of a transition metal was not formed from the central portion of a particle to the surface portion thereof.

### Experimental Example 6. Evaluation of characteristics of lithium secondary battery (full-cell) according to change in operating conditions

After completing six formation cycles performed on each of the lithium secondary batteries (full-cells) manufactured in Preparation Example 3 using the positive electrode active material according to Example 1 using an electrochemical analyzer (Toyo, Toscat-3100) under the conditions of 25 °C, a voltage range of 2.0V to 4.6V, and 0.2C/0.2C, 300 charge/discharge experiments were conducted under the conditions of 25°C and 1C/1C.

Through the charge/discharge experiments, a discharge capacity after the 300^{th} charge/discharge cycle, the ratio of discharge capacity after the 300^{th} charge/discharge cycle to the initial discharge capacity (capacity retention rate), an average discharge voltage after the 300^{th} charge/discharge cycle, and the ratio of an average discharge voltage after the 300^{th} charge/discharge cycle to the initial average discharge voltage (voltage retention rate) were measured. In addition, the volume change rate of the lithium secondary battery(full-cell) was obtained by converting the ratio of a volume after the 300^{th} charge/discharge cycle to the initial volume (before charging/discharging) into %.

The operating voltage ranges during the charging/discharging of the lithium secondary batteries (full-cells) and the results of the charge/discharge experiments are shown in Table 8 below. In Table 8 below, the full-cells having different operating voltage ranges during charging/discharging were classified into L1 to L9, respectively.

**[Table 8]**

| Classification | Units | L1 | L2 | L3 | L4 | L5 | L6 | L7 | L8 | L9 |
|---|---|---|---|---|---|---|---|---|---|---|
| Upper voltage limit (ov1) | V | 4.6 | 4.6 | 4.6 | 4.5 | 4.5 | 4.5 | 4.4 | 4.4 | 4.4 |
| Lower voltage limit (ov2) | V | 2.0 | 2.5 | 3.0 | 2.0 | 2.5 | 3.0 | 2.0 | 2.5 | 3.0 |
| ov 1-ov2 | V | 2.6 | 2.1 | 1.6 | 2.5 | 2.0 | 1.5 | 2.4 | 1.9 | 1.4 |
| Discharge capacity at 1^{st} cycle | mAh/ g | 186.9 | 183.8 | 170.2 | 184.0 | 180.9 | 168.1 | 175.3 | 172.1 | 160.3 |
| Capacity retention rate at 300^{th} cycle | % | 90.9 | 91.0 | 89.3 | 95.1 | 96.1 | 92.1 | 96.5 | 97.7 | 95.2 |
| Average discharge voltage at 1^{st} cycle | V | 3.53 | 3.55 | 3.61 | 3.53 | 3.54 | 3.62 | 3.52 | 3.54 | 3.60 |
| Voltage retention rate at 300^{th} cycle | % | 97.2 | 98.3 | 98.9 | 98.0 | 98.9 | 99.2 | 98.6 | 99.4 | 99.7 |
| Volume change rate | % | 0.7 | 0.4 | 0.1 | - | - | - | - | - | - |

| | | | | | | | | | | |
|---|---|---|---|---|---|---|---|---|---|---|
| *ov1 : Upper voltage limit of operating voltage range *ov2 : Lower voltage limit of operating voltage range | | | | | | | | | | |

Referring to the results of evaluating the full-cells in Table 8, even when the same lithium manganese-based oxide was used as a positive electrode active material, it can be confirmed that there is a great change in characteristics related to capacity and lifetime depending on the voltage range during operation of lithium secondary batteries (full-cells).

Specifically, in the case of L1, it was measured that the characteristics related to capacity and lifetime were satisfactory, but it showed a volume change rate of 0.7% even after the 300^{th} charge/discharge cycle, confirming that the stability of the lithium secondary battery was drastically reduced.

On the other hand, in the case of L2 which has the same upper voltage limit as L1 but has a higher lower voltage limit than L1, it showed similar capacity and lifetime characteristics to L1 and a volume change rate of only 0.4%, confirming that the lithium secondary battery is improved compared to L1.

In the case of L3 which has the same upper voltage limit as L2 but has a higher lower voltage limit than L2, it can be confirmed that the capacity retention rate and voltage retention rate were similar to those of L1 and L2, but the discharge capacity (170.2 mAh/g) after the 300^{th} charge/discharge cycle was slightly insufficient.

In the case of L4 and L5 which have a lower upper voltage limit than L1, they showed a greater capacity retention rate and voltage retention rate than L1 and L2, confirming that the stability of the lithium secondary batteries was also improved. On the other hand, in the case of L6 which has the same upper voltage limit as L4 and L5 but has a higher lower voltage limit, it was confirmed that, as the lower voltage limit of the operating voltage range increased, the discharge capacity (168.1mAh/g) after the 300^{th} charge/discharge cycle was slightly insufficient and the capacity retention rate also decreased compared to L4 and L5.

In the case of L7 and L8 which have a lower upper voltage limit than L4, it can be confirmed that the discharge capacity slightly decreased compared to L4, but the capacity retention rate and voltage retention rate increased compared to L4 and L5. However, in the case of L9 which has the same upper voltage limit as L7 and L8, but has a higher lower voltage limit, it can be confirmed that the discharge capacity (160.3mAh/g) after the 300^{th} charge/discharge cycle and the capacity retention rate decreased.

### Experimental Example 7. Evaluation of characteristics of lithium secondary battery (full-cell) according to change in formation conditions

After completing six formation cycles performed on each of the lithium secondary batteries (full-cells) manufactured in Preparation Example 3 using the positive electrode active material according to Example 1 using an electrochemical analyzer (Toyo, Toscat-3100) under the conditions of 25 °C and 0.2C/0.2C, charge/discharge experiments were conducted under the conditions of 25 °C or 45 °C and 1C/1C.

Through the charge/discharge experiments, a discharge capacity after the 500^{th} charge/discharge cycle, the ratio of discharge capacity after the 500^{th} charge/discharge cycle to the initial discharge capacity (capacity retention rate), an average discharge voltage after the 500^{th} charge/discharge cycle, and the ratio of an average discharge voltage after the 500^{th} charge/discharge cycle to the initial average discharge voltage (voltage retention rate) were measured. In addition, the volume change rate of the lithium secondary battery(full-cell) was obtained by converting the ratio of a volume after the 500^{th} charge/discharge cycle to the initial volume (before charging/discharging) into %.

The formation and operating voltage ranges the during charging/discharging of the lithium secondary batteries (full-cells) and the results of the charge/discharge experiments are shown in Table 9 below. In Table 9 below, the full-cells having different formation and operating voltage ranges during charging/discharging were classified into L10 to L13, respectively.

**[Table 9]**

| Classification | Units | L10 | L11 | L12 | L13 |
|---|---|---|---|---|---|
| Upper voltage limit of formation (fv1) | V | 4.6 | 4.6 | 4.6 | 4.6 |
| Lower voltage limit of formation (fv2) | V | 2.0 | 2.5 | 2.0 | 2.5 |
| Upper voltage limit of operation (ov1) | V | 4.6 | 4.6 | 4.6 | 4.6 |
| Lower voltage limit of operation (ov2) | V | 2.0 | 2.5 | 2.0 | 2.5 |
| Operating temperature | °C | 25 | 25 | 45 | 45 |
| Discharge capacity at first cycle | mAh/g | 187.1 | 183.5 | 220.0 | 215.7 |
| Capacity retention rate at 500^{th} cycle | % | 86.7 | 87.4 | 82.9 | 84.1 |
| Average discharge voltage at first cycle | V | 3.52 | 3.53 | 3.61 | 3.62 |
| Voltage retention rate at 500^{th} cycle | % | 97.7 | 98.6 | 98.0 | 98.1 |
| Volume change rate | % | - | - | 7.8 | 5.4 |

| | | | | | |
|---|---|---|---|---|---|
| *fv1 : Upper voltage limit of formation voltage range *fv2 : Lower voltage limit of formation voltage range *ov1 : Upper voltage limit of operating voltage range *ov2 : Lower voltage limit of operating voltage range | | | | | |

Referring to the results of evaluating the full-cells in Table 9, it can be confirmed that the volume change rate of the lithium secondary battery after the lifetime experiments (500 charge/discharge cycles) can vary according to the voltage range, operating temperature and operating voltage range during the formation of each of the lithium secondary batteries (full-cells) even when the same lithium manganese-based oxide is used as a positive electrode active material.

Specifically, comparing L10 and L11, when the operating temperature is 25 °C, it can be confirmed that, regardless of the lower voltage limits of the formation and operating voltage ranges, there is no volume change of the lithium secondary battery after the lifetime experiments (500 charge/discharge cycles), and the discharge capacity and charge retention rate are also similar. On the other hand, when the operating temperature is 45 °C, it can be confirmed that the volume change of the lithium secondary battery is reduced in L13 in which the lower voltage limits of the formation and operating voltage ranges are 2.5V compared to L12 in which the lower voltage limits of the formation and operating voltage ranges are 2.0V.

In the above, the embodiments of the present invention have been described, but it will be understood by those of ordinary skill in the art that the present invention may be changed and modified in various ways by addition, alteration, or deletion of components without departing from the spirit of the present invention defined in the appended claims.

## Claims

1. A lithium secondary battery using a positive electrode active material comprising a lithium manganese-based oxide in which a phase belonging to a C2/m space group and a phase belonging to an R3-m space group are dissolved or complexed,
wherein the lithium secondary battery is operated in an operating voltage range in which the upper voltage limit (ov1) is greater than 4.3V after at least one formation cycle in a formation voltage range in which the upper voltage limit (fv1) is 4.4V or more based on a positive electrode potential, and
the operating voltage range during operation of the lithium secondary battery is set so that the difference (ov1-ov2) between the upper voltage limit (ov1) and the lower voltage limit (ov2) of the operating voltage range is greater than 1.6V and less than 2.6V.

2. The lithium secondary battery of claim 1, wherein the first cycle during the formation of the lithium secondary battery is performed in a formation voltage range in which the upper voltage limit (fv1) is 4.4V or more.

3. The lithium secondary battery of claim 1, wherein the lithium secondary battery is formed in a formation voltage range in which the lower voltage limit (fv2) is greater than 2.0V and less than 3.0V based on a positive electrode potential.

4. The lithium secondary battery of claim 1, wherein the upper voltage limit (ov1) of the operating voltage range during operation of the lithium secondary battery is set to be within a range of greater than 4.3V and 5.0V or less.

5. The lithium secondary battery of claim 1, wherein the lower voltage limit (ov2) of the operating voltage range during operation of the lithium secondary battery is set to be within a range of 2.0V or more and less than 3.0V.

6. The lithium secondary battery of claim 1, wherein when the upper voltage limit (ov1) of the operating voltage range during operation of the lithium secondary battery is 4.6V or more, the lower voltage limit (ov2) is set to be within a range of greater than 2.0V and less than 3.0V.

7. The lithium secondary battery of claim 1, wherein when the upper voltage limit (ov1) of the operating voltage range during operation of the lithium secondary battery is 4.5V or more and less than 4.6V, the lower voltage limit (ov2) is set to be within a range of 2.0V or more and less than 3.0V.

8. The lithium secondary battery of claim 1, wherein when the upper voltage limit (ov1) of the operating voltage range during operation of the lithium secondary battery is less than 4.5V, the lower voltage limit (ov2) is set to be within a range of 2.0V or more and less than 3.0V.

9. The lithium secondary battery of claim 1, wherein the lithium manganese-based oxide is a core-shell particle in which at least one transition metal constituting the lithium manganese-based oxide exhibits a concentration gradient from the core to the shell.

10. The lithium secondary battery of claim 9, wherein the lithium manganese-based oxide is a core-shell particle in which a concentration of at least one selected from nickel and manganese exhibits a gradient from the core to the shell.

11. The lithium secondary battery of claim 1, wherein the lithium manganese-based oxide is represented by Chemical Formula 1:
[Chemical Formula 1] Li(LiₐM1ₓM2_{y})O_{2-b}X_{b}
wherein,
M1 is at least one selected from Ni and Mn,
M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, and Nd, and M2 does not overlap with M1,
X is a halogen capable of substituting at least some of the oxygen present in the lithium manganese-based oxide,
0<a≤0.7, 0<b≤0.1, 0<x≤1, 0≤y<1, and 0<x+y≤1.

12. The lithium secondary battery of claim 1, wherein the lithium manganese-based oxide is represented by Chemical Formula 1-1 below:
[Chemical Formula 1-1] rLi₂MnO_{3-b"}X'_{b"}·(1-r)Li_{a'}M1_{x'}M2_{y'}.Q_{2-b'}X_{b'}
wherein,
M1 is at least one selected from Ni and Mn,
M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, and Nd, and M2 does not overlap with M1,
X and X' are halogens capable of substituting at least some of the oxygens present in the lithium manganese-based oxide,
0<r≤0.7, 0<a'≤1, 0≤b'≤0.1, 0<x'≤1, 0≤y'<1, and 0<x'+y'≤1.

13. The lithium secondary battery of claim 9, wherein there is a barrier layer covering at least a part of the surface of the core-shell particle.

14. The lithium secondary battery of claim 13, wherein the lithium manganese-based oxide is present as a secondary particle in which a plurality of primary particles agglomerate, and
the barrier layer covers at least a part of the surfaces of the primary particle and the secondary particle.

15. The lithium secondary battery of claim 14, wherein a grain boundary is defined between adjacent primary particles, and
the barrier layer is present in a state of being diffused from the surface portion of the secondary particle to the central portion thereof along the grain boundary.

16. The lithium secondary battery of claim 13, wherein the barrier layer includes a first oxide represented by Chemical Formula 2 below:
[Chemical Formula 2] Li_{c}B_{d}M3ₑO_{f}
wherein,
M3 is at least one selected from Ni, Mn, Co, Al, Nb, Si, Ti, Zr, Ba, K, Mo, Fe, Cu, Cr, Zn, Na, Ca, Mg, Pt, Au, Eu, Sm, W, Ce, V, Ta, Sn, Hf, Gd, and Nd,
0≤c≤8, 0<d≤8, 0≤e≤8, and 2≤f≤13.

17. The lithium secondary battery of claim 13, wherein the barrier layer includes a second oxide represented by Chemical Formula 3 below:
[Chemical Formula 3] Li_{g}M4ₕOᵢ
wherein,
M4 is at least one selected from Ni, Mn, Co, Al, Nb, Si, Ti, Zr, Ba, K, Mo, Fe, Cu, Cr, Zn, Na, Ca, Mg, Pt, Au, Eu, Sm, W, Ce, V, Ta, Sn, Hf, Gd, and Nd,
0≤g≤8, 0≤h≤8, and 2≤i≤13, and the case in which both g and h are 0 is excluded.

18. The lithium secondary battery of claim 13, wherein the barrier layer includes a third oxide represented by Chemical Formula 4 below:
[Chemical Formula 4] LiⱼM5ₖ(PₗOₘ),
wherein,
M5 is at least one selected from Ni, Mn, Co, Al, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, and Nd,
0≤j≤10, 0≤k≤8, 0<1≤4, 0<m≤10, and 0<n≤13, and the case in which both j and k are 0 is excluded.
